(19) Europäisches Patentamt
European Patent Office
Office européen des brevets

(11) **EP 3 421 860 B1**

## (12) EUROPEAN PATENT SPECIFICATION

(45) Date of publication and mention
of the grant of the patent:
**17.06.2020 Bulletin 2020/25**

(21) Application number: **17756603.1**

(22) Date of filing: **23.02.2017**

(51) Int Cl.:
*F16L 59/065* (2006.01)    *B32B 27/00* (2006.01)
*B32B 1/00* (2006.01)    *B32B 3/04* (2006.01)
*B32B 7/12* (2006.01)    *B32B 25/08* (2006.01)
*B32B 27/32* (2006.01)    *B32B 27/34* (2006.01)
*B32B 27/36* (2006.01)    *B32B 27/38* (2006.01)
*B32B 27/40* (2006.01)    *B32B 27/30* (2006.01)
*B32B 27/28* (2006.01)    *B32B 25/16* (2006.01)
*B32B 27/16* (2006.01)    *B32B 27/18* (2006.01)
*B32B 27/20* (2006.01)    *B32B 27/08* (2006.01)

(86) International application number:
**PCT/JP2017/006894**

(87) International publication number:
**WO 2017/146165 (31.08.2017 Gazette 2017/35)**

(54) **VACUUM INSULATION MATERIAL OUTER PACKAGING MATERIAL, VACUUM INSULATION MATERIAL, AND ARTICLE WITH VACUUM INSULATION MATERIAL**

ÄUSSERES VERPACKUNGSMATERIAL MIT VAKUUMISOLATIONSMATERIAL, VAKUUMISOLATIONSMATERIAL UND ARTIKEL MIT VAKUUMISOLATIONSMATERIAL

MATÉRIAU D'EMBALLAGE EXTERNE DE MATÉRIAU D'ISOLATION SOUS VIDE, MATÉRIAU D'ISOLATION SOUS VIDE, ET ARTICLE DOTÉ D'UN MATÉRIAU D'ISOLATION SOUS VIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2016 JP 2016033342**

(43) Date of publication of application:
**02.01.2019 Bulletin 2019/01**

(73) Proprietor: **Dai Nippon Printing Co., Ltd.**
**Tokyo-to 162-8001 (JP)**

(72) Inventors:
• **MUNEDA, Taku**
**Tokyo 162-8001 (JP)**
• **IMAI, Masahiro**
**Tokyo 162-8001 (JP)**

(74) Representative: **Beck Greener LLP**
**Fulwood House**
**12 Fulwood Place**
**London WC1V 6HR (GB)**

(56) References cited:
JP-A- 2003 262 296    JP-A- 2007 327 619
JP-A- 2010 091 105    JP-A- 2013 103 343
US-A1- 2015 344 173

EP 3 421 860 B1

**Description**

Technical Field

The present invention relates to a vacuum insulation material outer packing material and the like.

Background Art

In recent years, reduction of greenhouse gas has been promoted to prevent global warming, and energy saving in electronic products, vehicles, facility devices, buildings and the like has been demanded. Above all, from the viewpoint of reducing power consumption, adoption of a vacuum insulation material to electronic products has been advanced. In a device having an exothermic part inside the main body such as an electronic product and in a device having a temperature keeping function utilizing heat from outside, it is possible to improve insulation properties as a device overall by including a vacuum insulation material. Accordingly, reduction of power consumption in a device such as an electronic product has been attempted by using a vacuum insulation material.

The vacuum insulation material is formed by disposing a core material in a bag body formed by a packing material, decompressing inside the bag body with the disposed core material to be in a vacuum state, and thermally welding edges of the bag body to seal. Circulation of gas is blocked by making inside of the insulation material to be in a vacuum state, and thus the vacuum insulation material can exhibit high insulating properties. Also, in order to maintain the insulating properties of the vacuum insulation material for a long period of time, inside of the bag body formed using the outer packing material is required to be maintained in a highly vacuum state for a long period. Accordingly, the outer packing material requires various functions such as gas barrier properties to prevent gas from infiltrating from outside, and thermal adhesiveness to cover the core material and to seal thereof.

Thus, the outer packing material is configured as a layered body comprising a plurality of films including each of these functional properties. As an embodiment of a general outer packing material, a thermally weldable film, a gas barrier film, and a protection film are layered, and the films are respectively adhered to each other via an adhesive and the like (refer to Patent Documents 1 and 2). Patent Document 1 describes that two nylon films are used as the outer packing material for the purpose of preventing the vacuum state from degrading due to a generation of a pin hole in a gas barrier film caused by actions such as skewering. Also, Patent Document 2 describes that a protection film with high tensile elasticity is disposed at both surfaces of the gas barrier film for the purpose that the edges of the gas barrier film where the outer packing materials are adhered to each other is not directly influenced from bending when the vacuum insulation material is formed using the outer packing material.

Patent Document 3 relates to a laminate for a vacuum insulation material comprising a heat-sealable resin layer and a gas barrier layer. The gas barrier layer has vapor deposition layer(s), laminated on a base material consisting of a plastic film.

Citation List

Patent Documents

Patent Document 1: Japanese Patent Application Laid-Open (JP-A) No. 2003-262296
Patent Document 2: JP-A No. 2013-103343
Patent Document 3: JP 2007 327619A

Summary

Technical Problem

However, the outer packing materials of Patent Document 1 and Patent Document 2 have had problems that, even when it has been confirmed that the outer packing material itself exhibited sufficient gas barrier properties, when the outer packing material is used to form the vacuum insulation material, the vacuum state has not been sufficiently kept and insulating properties cannot be maintained for a long period of time. In particular, there has been a problem that even in a vacuum insulation material with low initial thermal conductivity, insulating properties has been degraded chronologically when the vacuum insulation material is exposed to environment with high temperature and high humidity.

The present invention has been made in view of the above problems, and a main object thereof is to provide a vacuum insulation material outer packing material capable of forming a vacuum insulation material that can maintain insulating properties for a long period of time even in the environment with high temperature and high humidity.

Solution to Problem

The present invention provides a vacuum insulation material outer packing material comprising a thermally weldable film and a gas barrier film, characterized in that: the gas barrier film comprises a resin substrate, and a barrier layer disposed at least one surface side of the resin substrate; and when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

According to the present invention, the dimension change rate of the outer packing material after being held for a fixed time in the environment with high temperature and high humidity is in the specific range, so as to allow the outer packing material to maintain high gas barrier properties even in the environment with high temperature and high humidity. Thereby, the outer packing material is capable of forming a vacuum insulation material that can maintain insulating properties for a long period of time even in the environment with high temperature and high humidity.

In the present invention, it is preferable that a water vapor permeability is 0.2 g/(m²·day) or less after the vacuum insulation material outer packing material is held for 500 hours under the atmosphere having a temperature of 70°C and a humidity of 90%RH. The outer packing material of the present invention is capable of preventing the water vapor permeability from rising chronologically in the above described environment since the water vapor permeability after being held for a long time in the environment with high temperature and high humidity is in the specific range. Accordingly, the outer packing material of the present invention can stably maintain excellent barrier properties not only at the initial stage, but also for a long period of time in the environment with high temperature and high humidity. Then, the outer packing material of the present invention has the above described characteristics so as to form a vacuum insulation material capable of exhibiting high insulating properties for a longperiod of time in the environment with high temperature and high humidity.

In the present invention, it is preferable that a water content is 10000 ppm or less after the vacuum insulation material outer packing material is held for 2 hours under an atmosphere having a temperature of 70°C and a humidity of 90%RH. The water content is in the above described range so as to inhibit expansion of the resin substrate and other resin layers configured in the outer packing material in the gas barrier film due to moisture absorption in the environment with high temperature and high humidity, and to decrease the dimension change rate in the outer packing material overall.

In the present invention, it is preferable that the barrier layer is either an inorganic compound or a mixture of an organic compound and an inorganic compound.

Also, in the present invention, it is preferable that the outer packing material comprises two or more of the gas barrier film. When the outer packing material has two or more of the gas barrier film, in a form of the vacuum insulation material, outer side barrier layer is capable of greatly restraining the amount of water vapor from reaching at inner side barrier layer, and further, capable of protecting the inner side barrier layer from damage and deterioration; thereby, the inner side barrier layer is capable of exhibiting higher gas barrier properties.

In the present invention, it is preferable that the outer packing material further comprises a protection film at a surface of the gas barrier film opposite to the thermally weldable film. The reason therefor is to protect each film used together as the outer packing material such as the thermally weldable film and the gas barrier film from damage and deterioration.

The present invention provides a vacuum insulation material comprising a core material and a vacuum insulation material outer packing material enclosing the core material, characterized in that the vacuum insulation material outer packing material comprises a thermally weldable film and a gas barrier film; the gas barrier film comprises a resin substrate, and a barrier layer disposed at least one surface side of the resin substrate; and when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

According to the present invention, the vacuum insulation material outer packing material is the above described vacuum insulation material outer packing material of the present invention, so as to allow the vacuum insulation material to maintain insulating properties for a long period of time even in the environment with high temperature and high humidity.

The present invention provides an article with a vacuum insulation material provided with an article including a thermal insulation region and a vacuum insulation material, characterized in that the vacuum insulation material comprises a core material and a vacuum insulation material outer packing material enclosing the core material; the vacuum insulation material outer packing material comprises a thermally weldable film and a gas barrier film; the gas barrier film comprises a resin substrate, and a barrier layer disposed at least one surface side of the resin substrate;

and when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

According to the present invention, the above described vacuum insulation material outer packing material is used in the vacuum insulation material provided in the article, and the vacuum insulation material is capable of maintaining insulating properties for a long period of time in the environment with high temperature and high humidity, so as to allow the article to have excellent insulating properties. For example, when the article is in a form of a device, in a device having a heat source part, the vacuum insulation material insulates the heat from the heat source part and prevents the temperature of the device overall from being high; meanwhile, in a device having a temperature keeping part, the vacuum insulation material keeps the state of the temperature in the temperature keeping part. Thereby, the device is allowed to have highly energy saving properties restraining power consumption.

Advantageous Effects

The present invention exhibits operational effects such as to provide a vacuum insulation material outer packing material and the like capable of forming a vacuum insulation material that can maintain insulating properties for a long period of time even in the environment with high temperature and high humidity.

Brief Description of Drawings

FIG. 1 is a schematic cross-sectional view illustrating an example of the vacuum insulation material outer packing material of the present invention.
FIG. 2 is a schematic cross-sectional view illustrating an example of the vacuum insulation material of the present invention.
FIG. 3 is an explanatory view explaining a method for collecting a measurement sample to be used for a dimension measurement of a vacuum insulation material outer packing material.
FIGS. 4A to 4F are schematic cross-sectional views illustrating other examples of the vacuum insulation material outer packing material of the present invention.
FIG. 5 is a graph showing the water vapor permeability of the outer packing material in Examples 1, 2, and Comparative Example 1 after being held for 100 hours under the specific atmosphere.
FIG. 6 is a graph showing the chronological change in the water vapor permeability of the outer packing materials in Examples 5 to 9 per 100 hours under the atmosphere having a temperature of 70°C and a humidity of 90%RH.
FIG. 7 is a graph showing the water vapor permeability of the outer packing materials in Examples 1, 2, and Comparative Example 1 after holding humidity and heat, and after applying external force.
FIGS. 8A to 8B are graphs showing the dimension change rate of the outer packing materials in Experiment Examples 1, 2, and Comparative Experiment Example 1 after being held for 2 hours under the specific atmosphere.

Description of Embodiments

Hereinafter explained in details are the vacuum insulation material outer packing material, the vacuum insulation material, the article with the vacuum insulation material, a method for designing the vacuum insulation material outer packing material, and a method for producing the vacuum insulation material outer packing material of the present invention.

Incidentally, in the present descriptions, "vacuum insulation material outer packing material" is abbreviated to be "outer packing material" in some cases.

A. Vacuum insulation material outer packing material

First, the vacuum insulation material outer packing material of the present invention is explained.

The vacuum insulation material outer packing material of the present invention is a vacuum insulation material outer packing material comprising a thermally weldable film and a gas barrier film, characterized in that: the gas barrier film comprises a resin substrate, and a barrier layer disposed at least one surface side of the resin substrate; and when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

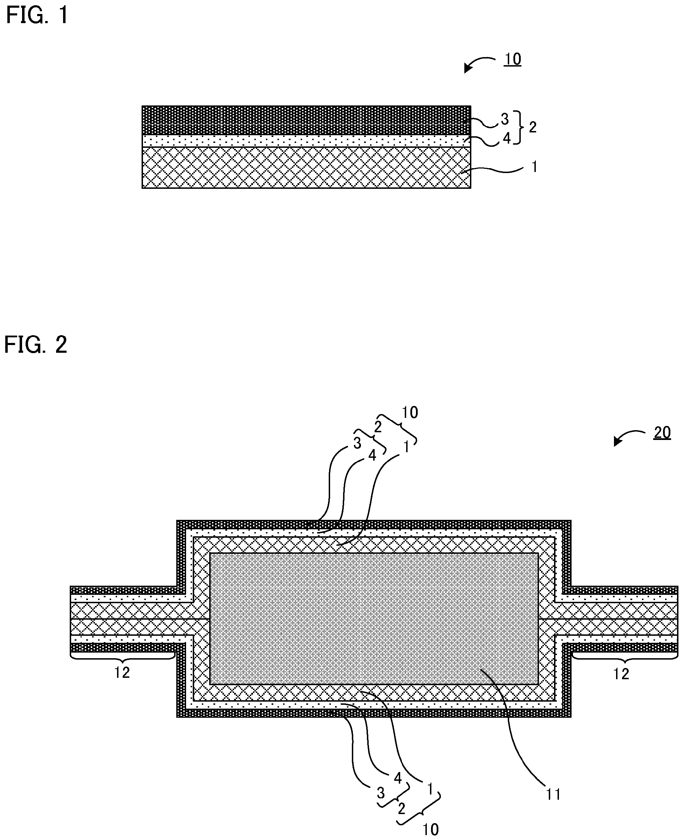

The outer packing material of the present invention is explained with reference to drawings. FIG. 1 is a schematic cross-sectional view illustrating an example of the outer packing material of the present invention. As exemplified in FIG. 1, outer packing material 10 of the present invention comprises thermally weldable film 1 and gas barrier film 2, and the gas barrier film 2 comprises resin substrate 3, and barrier layer 4 disposed at one surface side of the resin substrate 3. A dimension change rate of the outer packing material 10 after being held for a fixed time period in the environment with high temperature and high humidity is in the specific range.

Also, FIG. 2 is a schematic cross-sectional view illustrating an example of the vacuum insulation material using the outer packing material of the present invention. As exemplified in FIG. 2, the vacuum insulation material 20 comprises core material 11 and outer packing material 10 enclosing the core material 11. The vacuum insulation material 20 is formed by two pieces of the outer packing material 10 in the manner that the two pieces of the outer packing material 10 are brought into a form in which each of the thermally weldable film 1 faces to each other, the core material 11 is disposed therebetween, and then one of the peripheries of the core material 11 is left as an opening, and edges 12 of remaining three peripheries of the outer packing materials 10 are thermally welded to prepare a bag body wherein the core material 11 is disposed inside; next, the opening is sealed in the state the pressure inside the bag body is decompressed, and thereby the core material 11 is enclosed by the outer packing material 10. Incidentally, numeral references in FIG. 2 signify the same members as in FIG. 1; thus, the explanations herein are omitted.

According to the present invention, the dimension change rate of the outer packing material after being held for a fixed time in the environment with high temperature and high humidity is in the specific range, so as to allow the outer packing material to maintain high gas barrier properties even in the environment with high temperature and high humidity. Thus, the outer packing material is capable of forming a vacuum insulation material that can maintain insulating properties for a long period of time even in the environment with high temperature and high humidity.

It is general that insulating properties are degraded chronologically even in a vacuum insulation material with low initial thermal conductivity when exposed to the environment with high temperature and high humidity. Various reasons therefor have been considered; however, the inventors of the present invention have thoroughly researched and found out as the result that the chronological degrade of the gas barrier properties in the environment with high temperature and high humidity has been large in the outer packing material with large dimension change rate when exposed to the environment with high temperature and high humidity, and thereby the present invention has been achieved.

Incidentally, "a dimension of the vacuum insulation material outer packing material under an atmosphere having a temperature of 25°C and a humidity of 0%RH" may be referred to as "the initial dimension" of the vacuum insulation material outer packing material, and "a dimension of the vacuum insulation outer packing material after being held for 2 hours under an atmosphere having a temperature of 70°C and a humidity of 90%RH" may be referred to as "a dimension in humid and hot atmosphere" of the outer packing material in some cases. Also, "when setting a dimension of the outer packing material under an atmosphere having a temperature of 25°C and a humidity of 0%RH as a reference, a dimension change rate of the outer packing material after the outer packing material is held for 2 hours under an atmosphere having a temperature of 70°C and a humidity of 90%RH" may be referred to as "the dimension change rate in the environment with high temperature and high humidity" in some cases . Further, "gas barrier properties" and "gas barrier performance" mean the functions to prevent gas such as oxygen and/or water vapor from infiltrating unless otherwise described.

The outer packing material of the present invention comprises at least a thermally weldable film and a gas barrier film. Each constitution of the outer packing material of the present invention is hereinafter explained.

1. Characteristics of vacuum insulation material outer packing material

(1) Water vapor permeability of vacuum insulation material outer packing material

The water vapor permeability of the outer packing material of the present invention under the atmosphere having a temperature of 40°C and a humidity of 90%RH is preferably low; it is specifically 0.5 g/(m$^2$·day) or less, and above all, 0.1 g/(m$^2$·day) or less, and particularly preferably 0.05 g/(m$^2$·day) or less. The outer packing material has the water vapor permeability in the range described above, so as to form a vacuum insulation material with high insulating properties.

Incidentally, regarding the water vapor permeability of the outer packing material, the water vapor permeability under the atmosphere having a temperature of 40°C and a humidity of 90%RH may be referred to as "the initial water vapor permeability" in some cases.

Also, the water vapor permeability of the outer packing material of the present invention after being held for 500 hours under the atmosphere having a temperature of 70°C and a humidity of 90%RH is preferably lower; above all, it is preferably 0.2 g/(m$^2$·day) or less, more preferably 0.1 g/(m$^2$·day) or less, and particularly preferably 0.05g/(m$^2$·day) or less. Incidentally, the water vapor permeability after being held for 500 hours under the atmosphere having a temperature of 70°C and a humidity of 90%RH may be referred to as "the water vapor permeability after being held in high temperature and high humidity" in some cases .

Hereinafter, the reason why the water vapor permeability after being held in high temperature and high humidity regarding the outer packing material of the present disclosure is in the above described specific range, is explained.

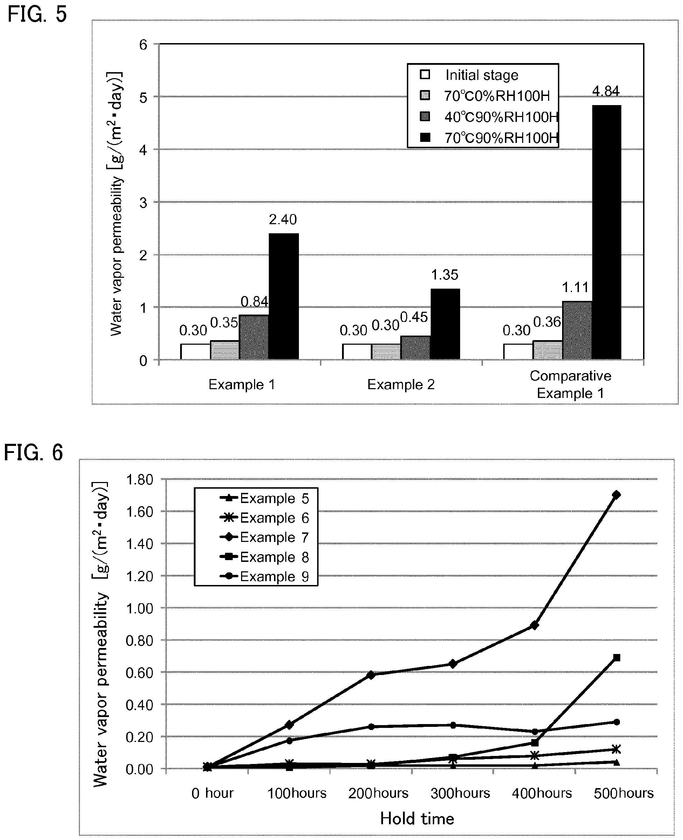

A conventional vacuum insulation material is often used in an environment with comparatively small change in the temperature and humidity for the usage environment, and the gas barrier properties of the outer packing material used in such a vacuum insulation material is generally specified as "the water vapor permeability in an environment having a temperature of 40°C and a humidity of 90%RH (initial water vapor permeability)". However, as explained in the later described Examples with reference to FIG. 5, tendencies of chronological change in water vapor permeability of the outer packing material when the outer packing material is held in the environment having a temperature of 40°C and a humidity of 90%RH differs from that when held in an environment having a temperature of 70°C and a humidity of 90%RH, even though the hold time is the same. This is presumably because problems easily occur depending on the structure and the kind of the barrier layer such that a defect such as a crack is generated in the barrier layer by receiving stress from thermal expansion, and the barrier layer is deteriorated due to the influence from humidity when the outer packing material is exposed to the environment with high temperature and high humidity; as the result, the gas barrier properties are degraded in some cases. Accordingly, it is difficult to accurately envisage the gas barrier properties of the outer packing material when the outer packing material is held in the environment with high temperature and high humidity for a long period of time, with the conventional temperature and humidity conditions.

Also, while gas such as oxygen and nitrogen is in a stable state at a normal temperature, water vapor is a substance that becomes stable in a liquid state at a normal temperature. When the humidity inside the vacuum insulation material increases, water vapor easily becomes liquid, and the liquid water fills the pore in the core material to transfer heat. Also, the thermal conductivity (approximately 0.561 W/mK) of liquid water (10°C) is extremely higher than the thermal conductivity (0.0241 W/mK) of air (0°C); it can be said that the environment with high temperature and high humidity which is "temperature of 70°C and humidity of 90%RH" is the environment particularly easily causing a phenomenon in which vaporized water permeates to the outer packing material as water vapor and intrudes inside the vacuum insulation material, becomes liquid inside the vacuum insulation material, and the liquid water fills pore in the core material to transfer heat.

Further, tendencies of chronological change in gas barrier properties of the outer packing material varies with factors such as the layer structure of the outer packing material, even in the same environment with high temperature and high humidity. As explained in the later described Examples with reference to FIG. 6, even in the same environment with high temperature and high humidity, the water vapor permeability of the outer packing material not only shows tendency of sequential increase, but also may show tendency of boosting after a fixed time passed in some cases depending on its layer structure. Here, in the vacuum insulation material, if the water vapor permeability of the outer packing material boosted and the gas barrier properties dropped sharply, the vacuum state inside would be drastically impaired to suddenly degrade the insulating properties; after that, it would be difficult to function as an insulation material. Accordingly, in order to specify the gas barrier properties of the outer packing material in the environment with high temperature and high humidity, it is necessary to specify the hold time considering the case the sudden performance degrading may be caused.

The present inventors obtained knowledge from the result of FIG. 6 that the water vapor permeability of the outer packing material boosted to the level the gas barrier properties could not be sufficiently exhibited in the atmosphere having a temperature of 70°C and a humidity of 90%RH when the hold time was up to 500 hours in some cases. In other words, the present inventors found out that it is possible to judge whether the gas barrier properties can be held for a long period of time or not even when the tendencies in chronological increase of the water vapor permeability of the outer packing material in the environment with high temperature and high humidity vary, by specifying the gas barrier properties of the outer packing material to be the value "water vapor permeability after being held for 500 hours under the atmosphere having a temperature of 70°C and a humidity of 90%RH".

Then, since the "water vapor permeability after being held for 500 hours under the atmosphere having a temperature of 70°C and a humidity of 90%RH" of the outer packing material of the present invention is in the specific range, and the water vapor permeability before and after being held at a high temperature and high humidity is in the same level, the chronological increase of the water vapor permeability in the atmosphere is restrained, and thus it is possible to stably maintain excellent gas barrier properties in the environment with high temperature and high humidity, not only at the initial stage but also for a long period of time. The outer packing material of the present invention has such characteristics so as to form the vacuum insulation material capable of exhibiting high insulating properties in the environment with high temperature and high humidity for a long period of time.

It is preferable to set the water vapor permeability of the outer packing material in the above described range when the outer packing material is the one before forming the vacuum insulation material, and similarly when the outer packing material is the one after forming the vacuum insulation material, that is in the state of the outer packing material of the vacuum insulation material. Incidentally, the water vapor permeability can be measured in the condition of a temperature of 40°C and a humidity of 90%RH using a water vapor permeability measurement device according to JIS K7129:2008 (AnnexB: infrared ray sensor method, hereinafter the same) . As the water vapor permeability measurement device, PERMATRAN from U.S. MOCON may be used.

The method for measuring the water vapor permeability of the outer packing material at the initial stage and after being held at high temperature and high humidity is hereinafter explained in further details.

The measurement of the initial water vapor permeability is performed in a manner that the outer packing material cut into a desired size of which outermost surface positioned on the gas barrier film side to the thermally weldable film in the thickness direction (layering direction) of the outer packing material is set as a high humidity side (water vapor supplying side), and installed between the upper room and the down room of the device, setting the permeation area to be approximately 50 cm$^2$ (permeation region: circle with a diameter of 8 cm), in accordance with JIS K7129:2008, and in the conditions of a temperature of 40°C and a humidity of 90%RH. The size to be cut may be, for example, a square of width of 9 cm × length of 9 cm.

Also, the measurement of the water vapor permeability after being held at high temperature and high humidity may be performed in the following procedures. First, two pieces of the outer packing material with the width of 21.0 cm × the length of 29.7 cm are prepared and stacked so as each of the thermally weldable film comes inner side, and the edge of all around (the region with the width of 10 mm in the position 1 cm from the outer periphery of the outer packing material) is thermally welded so as to bond each other at the heating temperature of 200°C under an air pressure, and thereby a test piece is obtained. The test piece is in the state where nothing is enclosed inside, and also, the inside is not decompressed. The test piece is held under the atmosphere having a temperature of 70°C and a humidity of 90%RH for 500 hours, the region of the test piece after being kept which is not thermally welded is cut out in the size with the width of 9 cm × the length of 9 cm, and the water vapor permeability of the cut out outer packing material is measured in the same measurement method and conditions (conditions of a temperature of 40°C and a humidity of 90%RH) as those for the initial water vapor permeability.

(2) Dimension change rate of vacuum insulation material outer packing material

The dimension change rate of the outer packing material of the present invention in the environment with high temperature and high humidity is in the specific range. In other words, when setting a dimension of the outer packing material under an atmosphere having a temperature of 25°C and a humidity of 0%RH as a reference, the dimension change rate of the outerpacking material after being held for 2 hours under an atmosphere having a temperature of 70°C and a humidity of 90%RH is 0.8% or less, preferably 0.7% or less, and more preferably 0.6% or less. The dimension change rate of the outer packing material in the above range allows the stress applied to the gas barrier film to be restrained even if the outer packing material is exposed to the environment with high temperature and high humidity; thus, the generation of a crack in the gas barrier film can be inhibited, and it is possible to enable the outer packing material to form a vacuum insulation material capable of maintaining insulating properties for a long period of time even in the environment with high temperature and high humidity.

Here, the reason for setting the dimension change rate of the outer packing material in the environment with high temperature and high humidity in the above range is explained in further details.

The main reason why the insulating properties of a vacuum insulation material is degraded chronologically when exposed to the environment with high temperature and high humidity is presumably because of factors such as thermal expansion of the outer packing material by the influence of the temperature and deterioration of the barrier layer by the influence of the humidity.

To solve the problem, the present inventors have found out that the dimension change of the outer packing material caused by swelling due to humidity with high temperature has greatly given influence to the chronological change in gas barrier properties of the outer packing material. Generally, the barrier layer used in the gas barrier film configured in the outer packing material tends to have smaller dimension change due to influence of humid heat than that of the other members configured in the outer packing material such as the resin substrate used in the gas barrier film and the thermally weldable film. Accordingly, when the dimension change rate of the outer packing material in the environment with high temperature and high humidity is large, a shearing stress is caused in the interface between the other members and the barrier layer inside the outer packing material, and the barrier layer receives the shearing stress and is damaged; as the result, the barrier properties of the outer packing material overall is presumably degraded. Such a damage mechanism of the barrier layer due to the shearing stress is different from the damage mechanism of the barrier layer due to outside stress such as bend of the outer packing material.

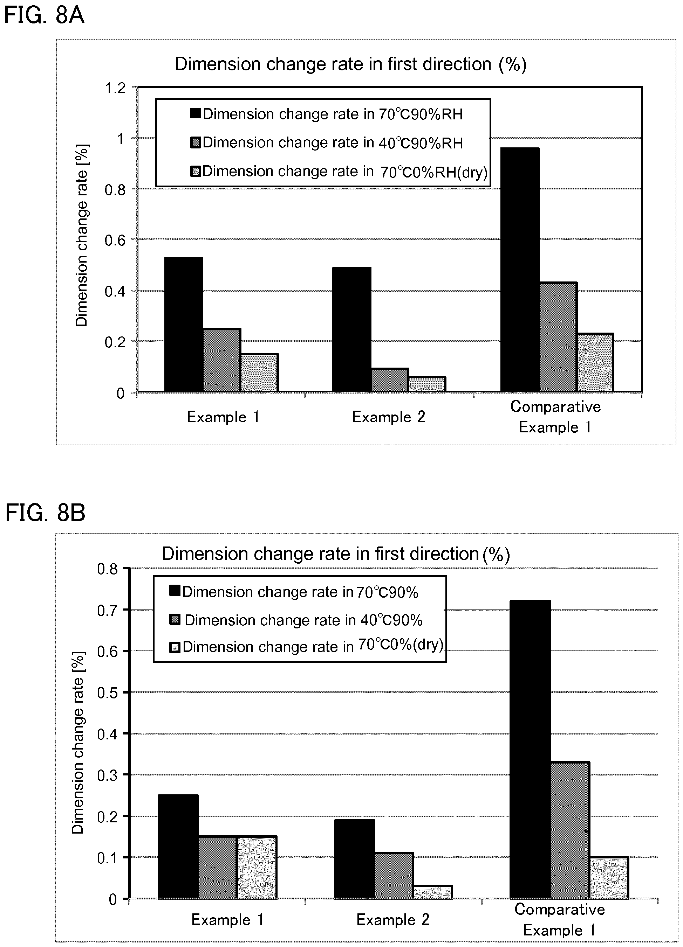

Here, the influence to the outer packing material when it is held in the environment with different temperature and humidity is explained with reference to FIG. 8 in the later described Experiment Examples: when the outer packing material is held under the atmosphere having a temperature of 70°C and a humidity of 90%RH, it is shown that the dimension change rate tends to increase more compared to the case when being held under the atmosphere having just an raised temperature, and under the atmosphere having just an raised humidity. Also, it is suggested from the result of FIG. 8 that the dimension change rate of the outer packing material receives greater influence from the humidity of the atmosphere than from the temperature of the atmosphere. It is presumed from the suggestion that it is necessary to consider not merely the thermal expansion of the outer packing material but the influence of water vapor at a high temperature when the dimension change rate of the outer pacing material is specified.

Also, as explained in the later described Examples with reference to FIG. 5, the water vapor permeability after being held for 100 hours under the atmosphere having a temperature of 70°C and a humidity of 0%RH is close to the value of the initial water vapor permeability of each outer packing material regardless of the structure of the outer packing material and the material of each layer; as the result, it is suggested that the influence the temperature of the atmosphere gives to the water vapor permeability of the outer packing material is extremely limited. Also, it is suggested that there is no big difference in the value of water vapor permeability among the outer packing materials after being held for 100 hours under the atmosphere having a temperature of 40°C and a humidity of 90%RH. On the other hand, it is suggested that the water vapor permeability greatly differs depending on the factors such as the structure of the outer packing material after being held for 100 hours under the atmosphere having a temperature of 70°C and a humidity of 90%RH. From these results, it is presumed that it is necessary to consider not merely the thermal expansion of the outer packing material but the influence of water vapor at a high temperature when the dimension change rate of the outer pacing material is specified.

It means that, according to the outer packing material of the present invention, the dimension change rate in the environment with high temperature and high humidity that is "atmosphere having a temperature of 70°C and a humidity of 90%RH" is in the above described specific range, and thus the shearing stress caused by, for example, swelling of the other layer, is not easily applied to the barrier layer even when exposed to the environment with high temperature and high humidity and the generation of a crack in the barrier layer can be inhibited. Then, the outer packing material of the present invention has such a characteristic so as to form the vacuum insulation material capable of maintaining the insulating properties for a long period of time even in the environment with high temperature and high humidity.

The dimension and the dimension change rate of the outer packing material can be measured and calculated by a regular method explained below using a thermomechanical analyzer (TMA) .

In the regular method, first, a test piece in a desired size is cut out from the outer packing material, and 8 pieces of measurement samples are collected from the test piece by the later described method. Regarding each of the collected 8 pieces of measurement samples, a dimension of the measurement sample in a series of steps is measured chronologically using the TMA with a load of 400 mN/mm$^2$ in pulling mode by placing each sample in a series of steps: a temperature raising step up to a temperature rising termination temperature of 70°C with a fixed humidity from a temperature rising starting temperature of 25°C and a humidity rising starting humidity of 0%RH; a sequential humidity raising step up to a humidity of humidity rising termination humidity of 90%RH at the fixed temperature; a sequential constant temperature and constant humidity step to hold the sample for 2 hours under the atmosphere having a temperature of 70°C and a humidity of 90%RH; and a sequential temperature lowering and humidity lowering step to lower the temperature to a temperature of 25°C and lower the humidity to a humidity of 0%RH. The dimension measurement in a series of steps is conducted in the conditions shown as below. Also, the dimension of the measurement sample is a dimension in a longer direction, and the longer direction of the measurement sample is a pulling direction during the measurement by the TMA. The dimension of the outer packing material may be the average value of the dimensions of the 8 pieces of the measurement samples.

Conditions for dimension measurement by TMA:

Thermomechanical analyzer: TMA/SS7100 from Hitachi High-Tech Science Corporation;
Width of measurement sample: 5 mm;
Length of measurement sample between zips: 10 mm;
Measurement atmosphere: nitrogen;
Temperature raising starting temperature: 25°C;
Humidity raising starting humidity: 0%RH;
Temperature rising termination temperature: 70°C;
Humidity rising termination humidity: 90%RH;
Temperature raising speed: 10°C/min;
Humidity raising speed: 20%RH/min;
Hold time in constant temperature and constant humidity step: 2 hours (under the atmosphere having a temperature of 70°C and a humidity of 90%RH); and
Dimension measurement frequency: per 0.16 minute.

Also, the dimension change rate in the environment with high temperature and high humidity can be calculated from the below formula (1) with the dimension of the measurement sample under the atmosphere having a temperature of 25°C and a humidity of 0%RH before raising temperature and raising humidity, and the dimension of the measurement sample after being held for 2 hours under the atmosphere having a temperature of 70°C and a humidity of 90%RH, among the dimensions of the measurement samples measured chronologically in a series of steps.

$$\text{Dimension change rate in environment with high temperature}$$

$$\text{and high humidity (\%)} = (L - L_0)/L_0 \times 100 \quad \dots \ (1)$$

(In the above formula (1), L represents the dimension of the measurement sample after being held for 2 hours under the atmosphere having a temperature of 70°C and a humidity of 90%RH, and $L_0$ represents the dimension of the measurement sample under the atmosphere having a temperature of 25°C and a humidity of 0%RH.)

The dimension change rate of the outer packing material in the environment with high temperature and high humidity may be the average value of the dimension change rates in the environment with high temperature and high humidity of the 8 pieces of the measurement samples calculated in the above formula (1).

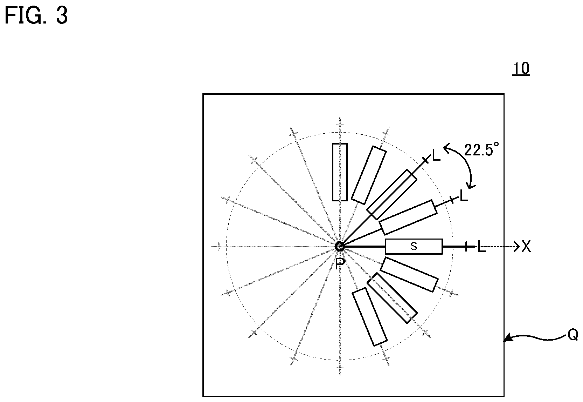

The measurement sample of the outer pacing material used in the dimension measurement by the regular method can be collected in a method shown in FIG. 3. Measurement sample S is collected in the manner as shown in FIG. 3: test piece Q in a desired size is cut out from the outer packing material, in the surface of the test piece Q; reference point P, and reference axis L which extends from the reference point P as a starting point to an arbitrary one direction X, are determined; the reference axis L is rotated per 22.5° with the rotating center of the reference point P; the one direction X of the reference axis L becomes a long direction on the reference axis L at each position. In this manner, 8 pieces of the measurement sample S in a radical pattern centered on the reference point P can be collected per one test piece. The measurement sample may be a rectangular shape with the length of the measurement sample between zips (10 mm) plus the length of zip grips at both ends, and the width of 5 mm. Also, the 8 pieces of the measurement samples are all in the same dimension. The collecting position of the measurement sample on the reference axis maybe, for example, the position the center of the rectangular passes the reference axis.

The number of the test piece cut out from the outer packing material is preferably at least one or more, and above all, preferably 3 or more. When the number of the test piece is 2 or more, the dimension change rate of the outer packing material in the environment with high temperature and high humidity may be the value of averaging the dimension change rate in the environment with high temperature and high humidity of the measurement sample per each test piece, and further averaging the results by the number of the test piece.

Incidentally, the dimension and the dimension change rate of the outer packing material in the present invention is determined by the regular method using the above described 8 pieces of the measurement samples; however, it can be also determined by an arbitrary method of which collecting method of the measurement sample is different as explained below. Hereinafter the determination method of the dimension change rate of the outer packing material by the arbitrary method is explained.

<Determination of dimension change rate of outer packing material by arbitrary method>

In the determination of the dimension change rate of the outer packing material by the arbitrary method, a measurement sample is collected in the following method. First, a test piece in a desired size is cut out from the outer packing material. The test piece may be, for example, a square shape 10 cm width on a side (provided that the value such as 5 cm may be appropriately selected for the outer packing material with one side not satisfying 10 cm). Next, the direction parallel to an arbitrary side of the test piece is determined as a first direction, and the direction parallel to the vertical side to the arbitrary side is determined as a second direction. A measurement sample with the first direction as a long direction and a measurement sample with the second direction as a long direction are respectively collected. The measurement sample may be a rectangular shape with the length of the sample between zips (10 mm) plus the length of zip grips at both ends in the long direction, and the width of 5 mm.

In the determination of the dimension change rate of the outer packing material by the arbitrary method, the dimension change rate of the measurement sample collected in the above described method to the initial dimension of the outer packing material (the dimension before raising the temperature and humidity: a temperature of 25°C and a humidity of 0%RH) is measured by a thermomechanical analyzer (TMA) in each temperature and humidity in a temperature raising step from 25°C to 70°C with a humidity from 0%RH to 0%RH, a sequential humidity raising step with the temperature of 70°C to a humidity of 90%RH, a sequential constant temperature and constant humidity step to hold the sample for 2 hours under the atmosphere having a temperature of 70°C and a humidity of 90%RH, and a sequential temperature lowering and humidity lowering step to a temperature of 25°C and a humidity of 0%RH, in the below conditions. As the thermomechanical analyzer, for example, TMA/SS7100 from Hitachi High-Tech Science Corporation may be used.

Measurement mode: pulling mode, load of 400 mN/mm$^2$
Length of sample: 10 mm
Width of sample: 5 mm
Temperature raising starting temperature: 25°C
Humidity raising starting humidity: 0%RH
Temperature rising termination temperature: 70°C
Humidity rising termination humidity: 90%RH (hold time with a temperature of 70°C and a humidity of 90%RH: 2 hours)
Temperature lowering termination temperature: 25°C
Humidity lowering termination humidity: 0%RH
Temperature raising lowering speed: 10°C/min
Humidity raising and lowering speed: 20%RH/min

Incidentally, the dimension change rate is defined by the below formula (2):

$$\text{Dimension change rate (\%)} = (L - L_0)/L_0 \times 100 \quad \dots(2)$$

(Provided that L represents the length after being held for 2 hours under the atmosphere having a temperature of 70°C and a humidity of 90%RH, and $L_0$ represents the length with a temperature of 25°C and a humidity of 0%RH, before raising the temperature and raising the humidity.)

(3) Water content of vacuum insulation material outer packing material

The less the water content of the outer packing material after being held under the atmosphere having a temperature of 70°C and a humidity of 90%RH is the more desirable. In specific, the water content after being held for 2 hours under atmosphere having a temperature of 70°C and a humidity of 90%RH is preferably 10000 ppm or less, and above all, preferably 9000 ppm or less. The water content of the outer packing material is in the above range and thus the expansion of the resin substrate and other resin layer configured in the outer packing material in the gas barrier film due to moisture absorption can be inhibited to lower the dimension change rate of the outer packing material overall.

The water content of the outer packing material can be calculated by an obtained value from the measurement of the water content of the outer packing material by the below method.

The water content of the outer packing material can be measured by a coulometric titration method of Karl-Fischer method in accordance with JIS K0113:2005. As a measurement device, for example, an integrated Karl Fischer moisture titrator (an integral interlocked model of a Karl Fischer moisture titrator MKC-510 and a moisture vaporizing device ADP-611, both from KYOTO ELECTRONICS MANUFACTURING CO., LTD.) may be used.

The measurement of the water content may be conducted in the following procedures. First, a pretreatment of holding the outer packing material for 2 hours under the atmosphere having a temperature of 70°C and a humidity of 90%RH is performed. The outer packing material after the pretreatment is kept in an aluminum pouch until the measurement begins. Next, a plurality of pieces in a size of 10 mm × 50 mm are cut out from the outer packing material after the pretreatment, the cut out outer packing material is placed on a sample boat made of quartz so as the sample weight becomes 0.5 g, and the sample boat made of quartz is set in a heating tube (preparation room). The heating tube (preparation room) is subjected to aging (back-purging) for 180 seconds while introducing carrier gas (nitrogen) at 250 mL/min, and then the heating part with the set temperature of 150°C is subjected to aging for 120 seconds. After that, the sample boat is transferred to the heating part and titrated for 600 seconds to measure the water content in the surrounding environment having a temperature of 20°C and a dew point of -50°C. The measurement is conducted in at least 1 hour after the outer packing material is taken out from the atmosphere where the pretreatment is performed.

The water content of the outer packing material can be defined by the below formula (3) based on the value of the water content obtained by the above described method.

$$\text{Water content (ppm)} = (G/M_s) \times 10^6 \quad \dots (3)$$

(In the formula (3), G is the water content detected in the above method (g), and $M_s$ is the weight of the sample placed on the sample boat (g).)

The water content may be measured for at least 3 pieces collected from one outer packing material, and the average value of the measured values may be the value of the water content in that condition.

2. Gas barrier film

The gas barrier film comprises a resin substrate, and a barrier layer disposed at least one surface side of the resin substrate. As the gas barrier film of the outer packing material, a material such as a metal foil is solely used in some cases. Such a metal foil has high gas barrier properties so as to maintain the degree of vacuum inside the vacuum insulation material high for a long period of time. However, an inorganic material such as the metal has high thermal conductivity and thus it is difficult to lower the thermal conductivity of the vacuum insulation material having such a gas barrier film. In the present invention, in view of the above problem, the gas barrier film is configured using a resin substrate and a barrier layer so as to allow the amount of the inorganic material used in the gas barrier film to be reduced, and to allow the thermal conduction by the inorganic material to be inhibited.

(1) Barrier layer

The barrier layer is disposed at least one surface side of the resin substrate and mainly contributes to the gas barrier properties of the gas barrier film. There are no particular limitations on the gas barrier layer if it can exhibit the desired gas barrier properties. For example, a layer mainly composed of an inorganic compound, a layer mainly composed of an organic compound, and a layer mainly composed of a mixture compound of an organic portion and an inorganic portion may be used. The barrier layer may and may not have transparency.

Examples of the organic compound in the layer mainly composed of the organic compound may include a resin. Also, examples of the mixture compound of the organic portion and the inorganic portion in the layer mainly composed of the mixture compound of the organic portion and the inorganic portion may include a mixture compound of a resin portion and an inorganic portion; in specific, a substance such as Kurarister™ CF from KURARAY CO. LTD. may be used. As the inorganic portion, the later described materials may be used as the inorganic compound in the layer mainly composed of the inorganic compound.

The inorganic compound in the layer mainly composed of the inorganic compound is the material that is capable of exhibiting desired gas barrier properties, and examples thereof may include one or two or more of the inorganic compound selected from: an inorganic oxide, an inorganic oxidized nitride, an inorganic nitride, an inorganic oxidized carbide, an inorganic oxidized carbonized nitride, and an oxidized silicon zinc. Specific examples thereof may include an inorganic compound containing one kind or two or more kinds of the element selected from: silicon (silica), aluminum, magnesium, calcium, potassium, tin, sodium, titanium, boron, yttrium, zirconium, cerium, and zinc. More specific examples thereof may include a silicon oxide, an aluminum oxide, a magnesium oxide, a titanium oxide, a tin oxide, a silicon zinc alloy oxide, an indiumalloy oxide, a silicon nitride, an aluminum nitride, a titanium nitride, and an oxidized nitridized silicon. The inorganic compound may be solely used and may be used by mixing the above materials in an arbitrary ratio.

Possibly, examples of the inorganic compound in the layer mainly composed of the inorganic compound may also include a metal and an alloy. Specific examples thereof may include a metal such as aluminum, stainless, titanium, nickel, iron, and copper, and an alloy including these.

Among the above described inorganic compounds, in the present invention, the inorganic oxide is preferable, and in particular, the aluminum oxide or the silicon oxide is preferable. The reason therefor is that they are not easily oxidized and highly adhesive to the later described resin substrate so as to exhibit high gas barrier properties when used as the barrier layer.

Among the above described barrier layers, in the present invention, the barrier layer is preferably the layer mainly composed of the inorganic compound, or the layer mainly composed of the mixture compound of the organic portion and the inorganic portion. The reason therefor is to maintain the gas barrier properties in the environment with high temperature and high humidity.

There are no particular limitations on the thickness of the barrier layer if it can exhibit the desired gas barrier properties; it depends on the kind of the barrier layer, but for example, it is preferably in a range of 5 nm to 200 nm, and above all, preferably in a range of 10 nm to 150 nm. If the thickness of the barrier layer does not satisfy the above range, the formation of the film would be insufficient to show the desired gas barrier properties in some cases, and if it exceeds the above range, there would be a risk that a crack is easily generated to degrade the flexibility, and there would be a risk that a heat bridge is generated in the vacuum insulation material formed by using the outer packing material of the present invention when the barrier layer includes a metal and an alloy.

The barrier layer may be a single layer, and two or more layers may be layered so as to have the total thickness in the above range. When two or more layers of the barrier layer are used, the barrier layer with the same composition maybe combined, and the barrier layers with different compositions may be combined. Also, the barrier layer may be subjected to a surface treatment such as a corona discharge treatment from the point that can achieve the improvement in the gas barrier properties and the adhesiveness with the other layers.

As a method to form the barrier layer at one surface side of the resin layer, conventionally known methods can be used depending on the kind of the barrier layer. For example, a method to form the barrier layer at the resin substrate using a dry film-forming method such as a physical vapor deposition (PVD) method and a chemical vapor deposition (CVD) method; in specific, a method such as a vacuum deposition method by an electron beam (EB) heating style, can be used. Also, methods such as a method using a ready-made barrier thin film and thermocompression-bonding the resin substrate and the thin film pre-heated, and a method of laminating to the resin substrate or the thin film via an adhesive layer, may be exemplified. Regarding the specific film-forming method of the barrier layer by the PVD method and the CVD method, for example, the method disclosed in JP-A No. 2011-5835 may be used.

(2) Resin substrate

There are no particular limitations on the resin substrate if it can support the barrier layer. For example, a resin film is suitably used. If the resin substrate is a resin film, the resin film may be unstretched, and may be uniaxially or biaxially stretched. The resin substrate may and may not have transparency.

There are no particular limitations on the resin used in the resin substrate. For example, usable are various resins including a polyolefin resin such as polyethylene and polypropylene; a polyester resin such as polyethylene terephthalate (PET), polyethylene naphthalate (PEN), and polybutylene terephthalate (PBT) ; a polyvinyl alcohol resin such as a cyclic polyolefin resin, a polystyrene resin, an acrylonitrile-styrene copolymer (AS resin), an acrylonitrile-butadiene-styrene copolymer (ABS resin), a poly(meth)acrylic resin, a polycarbonate resin, a polyvinyl alcohol (PVA) and ethylene-vinyl alcohol copolymer (EVOH); an ethylene-vinylester acetate copolymer, a polyamide resin such as various nylons, a polyimide resin, a polyurethane resin, an acetal resin, and a cellulose resin. In the present invention, among the above resins, a substance such as PET, polypropylene, EVOH, and PVA are suitably used. From the viewpoints such as toughness, oil resistance, chemical resistance, and easiness of availability, PET is more suitably used.

Examples of the factor of the dimension change of the outer packing material in the environment with high temperature and high humidity may include a dimension change of each member configured in the outer packing material. The resin substrate used in the gas barrier film is a substrate whereon the barrier layer mainly carrying the gas barrier properties of the outer packing material is formed; thus, if the dimension change rate of the resin substrate is large, a stress is applied to the barrier layer and there is possibility that a crack may be generated in the barrier layer. Accordingly, among each member configured in the outer packing material, it is particularly preferable that the resin substrate has a small dimension change rate in the environment with high temperature and high humidity; the same dimension change rate as the dimension change rate of the above described outer packing material, that is, when setting a dimension of the resin substrate under an atmosphere having a temperature of 25°C and a humidity of 0%RH as a reference, it is preferable that the dimension change rate of the resin substrate after holding the resin substrate for 2 hours under an atmosphere having a temperature of 70°C and a humidity of 90%RH is 0.8% or less, 0.7% or less above all, and 0.6% or less in particular. The dimension change rate of the resin substrate is in the above range so as to restrain the stress applied to the barrier layer even when the outer packing material is exposed to the environment with high temperature and high humidity to inhibit the generation of a crack in the barrier layer, and thus the outer packing material capable of forming the vacuum insulation material that can maintain the insulating properties for a long period of time in the environment with high temperature and high humidity can be obtained.

Examples of the main factor of the dimension change of the members in the environment with high temperature and high humidity may include swelling of the members. Accordingly, each member configured in the outer packing material and used in the present invention preferably does not have much water absorbency such that does not contain a lot of polar groups. Also, in an outer packing material generally configured by layering a plurality of layers, the layer at the outer side when it becomes a vacuum insulation material (the layer at the opposite side of the thermally weldable film) is easily influenced by humidity, and thus the layer that comes at the outer side when it becomes the vacuum insulation material is preferably particularly low in water absorbency. Thus, in the present invention, among the above described resins, it is preferable that the resin with low water absorbency is used in the resin substrate, and when the outer packing material has a plurality of the gas barrier films, it is preferable that the resin with lower water absorbency is used in the resin substrate of the gas barrier film that comes at the outer side when it becomes the vacuum insulation material.

In the resin substrate, various plastic compounding agent and additives may be included. Examples of the additive may include a lubricant, a crosslinking agent, an antioxidant, an ultraviolet absorber, a light stabilizer, a filler, a reinforcing agent, an anti-static agent, a pigment, and a modifier resin.

The resin substrate may be subjected to a surface treatment. The reason therefore is to improve the adhesion with the barrier layer. Examples of the surface treatment may include an oxidization treatment, a convexo-concaving treatment (surface roughing treatment), and an easily adhesive coating treatment disclosed in JP-A No. 2014-180837.

There are no particular limitations on the thickness of the resin substrate; however, for example, the thickness is in a range of 6 $\mu$m to 200 $\mu$m, and more preferably in a range of 9 $\mu$m to 100 $\mu$m.

(3) Over coating layer

In the present invention, at least one layer of the gas barrier film may have an over coating layer so as to cover the opposite surface side of the barrier layer to the resin substrate. Inclusion of the over coating layer allows the gas battier properties of the gas barrier film to improve. There are no particular limitations on such an over coating layer, and an over coating layer generally used can be used. For example, as the main component of the over coating layer, a mixture compound including an organic portion and an inorganic portion may be used.

The thickness of the over coating layer can be appropriately set depending on the kind of the over coating agent used therein, and there are no particular limitations if it allows the desired gas barrier properties to be obtained. For example, the thickness in a range of 50 nm to 500 nm, among them, in a range of 100 nm to 400 nm may be used.

There are varieties of mixture compounds; however, for example, a zinc acrylate-based mixture film such as Besela™ (registered trademark) from TOPPAN PRINTING CO., LTD., and a sol-gel compound containing at least one kind or more of alkoxide represented by a general formula $R^1_nM(OR^2)_m$ (provided that in the formula, $R^1$ and $R^2$ each represents a $C_{1-8}$ organic group, M represents a metal atom, n represents an integer of 0 or more, m represents an integer of 1 or more, and n + m represents the valence of M) and a water-soluble polymer, and obtained by further polycondensation thereof by a sol-gel method, may be used. Examples of the water-soluble polymer may include a polyvinyl alcohol-based resin, an ethylene-vinyl alcohol copolymer, an acrylate-based resin, natural polymer-based methyl cellulose, carboxy methyl cellulose, cellulose nanofiber, and polysaccharide. Incidentally, the zinc acrylate-based mixture film may be the same as that disclosed in JP-B No. 4373797; thus, the description herein is omitted.

In the present invention, among the above mixture compounds, it is preferable to use a compound (hereinafter referred to as "a sol-gel compound" in some cases) containing at least one kind or more of alkoxide represented by a general formula $R^1_nM(OR^2)_m$ (provided that in the formula, $R^1$ and $R^2$ each represents a $C_{1-8}$ organic group, M represents a metal atom, n represents an integer of 0 or more, m represents an integer of 1 or more, and n + m represents the valence of M) and a polyvinyl alcohol-based resin and/or an ethylene-vinyl alcohol copolymer, and obtained by further polycondensation thereof by a sol-gel method under presence of, for example, a sol-gel method catalyst, acid, water, and an organic solvent, as the over coating layer. The sol-gel compound is high in adhesive strength in the interface, and also, the treatment during film formation can be performed at a comparatively low temperature; thus, the deterioration of the material such as the resin layer due to heat can be inhibited.

The mixture compound may be, for example, pasted on the barrier layer of the gas barrier film and heat treated for 30 seconds to 10 minutes at a temperature in a range of 20°C to 180°C and a melting point or less of the resin substrate, so as to form the over coating layer to cover the opposite surface side of the barrier layer to the resin substrate.

Also, the mixture compound may be pasted twice or more on the barrier layer of the gas barrier film and heat treated for 30 seconds to 10 minutes at a temperature in a range of 20°C to 180°C and a melting point or less of the resin substrate to form two or more of the over coating layer.

Hereinafter the over coating layer mainly composed of the sol-gel compound is explained in details.

(a) Metal oxide component of sol-gel compound

As the alkoxide represented by the general formula $R^1_nM(OR^2)_m$, a partial hydrolysate of alkoxide and at least one kind or more of a hydrolysis condensate of alkoxide may be used. Also, the partial hydrolysate of alkoxide is not limited to the one in which all alkoxy groups are hydrolyzed; the one in which one or more is hydrolyzed, and a mixture thereof may be used. Further, as the condensate of the hydrolysis, dimer or more of the partial hydrolysate of alkoxide, in particular, the one in a range of dimer to hexamer may be used.

In the general formula $R^1_nM(OR^2)_m$, $R^1$ is an alkyl group with the carbon number of 1 to 8, preferably 1 to 5, and more preferably 1 to 4 which may have a branch; examples thereof may include a methyl group, an ethyl group, an n-propyl group, an i-propyl group, an n-butyl group, an i-butyl group, a sec-butyl group, a t-butyl group, an n-hexyl group, and an n-octyl group.

In the general formula $R^1_nM(OR^2)_m$, $R^2$ is an alkyl group with the carbon number of 1 to 8, more preferably 1 to 5, and particularly preferably 1 to 4 which may have a branch; examples thereof may include a methyl group, an ethyl group, an n-propyl group, an i-propyl group, an n-butyl group, a sec-butyl group, and others. Incidentally, when a plurality of $(OR^2)$ is present in one molecule, $(OR^2)$ may be the same and may be different.

In the general formula $R^1_nM(OR^2)_m$, as the metal atom represented by M, silicon, zirconium, titanium, aluminum, and others may be exemplified. In the present invention, the metal atom is preferably silicon. In this case, the alkoxide preferably usable in the present invention when n = 0 in the general formula $R^1_nM(OR^2)_m$ is the one represented by a general formula $Si(ORa)_4$ (provided that in the formula, Ra represents a $C_{1-5}$ alkyl group). In the formula, as the Ra, a methyl group, an ethyl group, an n-propyl group, an n-butyl group, and others may be used. Specific examples of such an alkoxy silane may include tetramethoxy silane $Si(OCH_3)_4$, tetraethoxy silane $Si(OC_2H_5)_4$, tetrapropoxy silane $Si(OC_3H_7)_4$, and tetrabutoxy silane $Si(OC_4H_9)_4$. Incidentally, silicon may be categorized as a metalloid in some cases;

however, silicon is included in a metal in this description.

Also, when n is 1 or more, an alkoxysilane represented by a general formula $Rb_nSi(ORc)_{4-m}$ (provided that in the formula, m represents an integer of 1, 2, 3, Rb and Rc represents a methyl group, an ethyl group, an n-propyl group, an n-butyl group, and others) can be used. As such an alkoxysilane, for example, methyltrimethoxysilane $CH_3Si(OCH_3)_3$, methyltriethoxysilane $CH_3Si(OC_2H_5)_3$, dimethyldimethoxysilane $(CH_3)_2Si(OCH_3)_2$, dimethyldiethoxysilane $(CH_3)_2Si(OC_2H_5)_2$, and others may be used. In the present invention, a substance such as the alkoxysilane and alkylalkoxysilane may be used solely or in combination of two or more kinds.

Also, in the present invention, a condensate of the alkoxysilane can be used. In specific, for example, polytetramethoxysilane, polytetraethoxysilane, and others may be used.

In the present invention, as the alkoxide represented by the general formula $R^1_nM(OR^2)_m$, zirconium alkoxide in which M is Zr can be suitably used. For example, tetramethoxyzirconium $Zr(OCH_3)_4$, tetraethoxyzirconium $Zr(OC_2H_5)_4$, tetraisopropoxyzirconium $Zr(iso-OC_3H_7)_4$, tetra-n-butoxyzirconim $Zr(OC_4H_9)_4$, and others may be exemplified.

Also, as the alkoxide represented by the general formula $R^1_nM(OR^2)_m$, titanium alkoxide in which M is Ti can be suitably used; for example, tetramethoxytitanium $Ti(OCH_3)_4$, tetraethoxytitanium $Ti(OC_2H_5)_4$, tetraisopropoxytitanium $Ti(iso-OC_3H_7)_4$, tetra-n-butoxytitanium $Ti(OC_4H_9)_4$, and others may be exemplified.

Also, as the alkoxide represented by the general formula $R^1_nM(OR^2)_m$, aluminum alkoxide in which M is Al can be used; for example, tetramethoxyaluminum $Al(OCH_3)_4$, tetraethxyaluminum $Al(OC_2H_5)_4$, tetraisopropoxyaluminum $Al(iso-OC_3H_7)_4$, tetra-n-butoxyaluminum $Al(OC_4H_9)_4$, and others may be used.

In the present invention, two or more kinds of the alkoxide may be used together. For example, if the alkoxysilane and the zirconium alkoxide are mixed and used, properties of the over coating layers to be obtained such as toughness and heat resistance can be improved, and also, degrade of properties such as retort resistance of the film when stretched can be avoided. On this occasion, the amount of use of the zirconium alkoxide to 100 parts by mass of the alkoxysilane is preferably in a range of 10 parts by mass or less. If it exceeded 10 parts by mass, the over coating layer to be formed would easily be gel, and also, the brittleness of the film would be large and the over coating layer would tend to be easily peeled off when covering the barrier layer; thus, it is not preferable.

Also, when the alkoxysilane and the titanium alkoxide are mixed and used, the thermal conductivity of the over coating layer to be obtained becomes low and thus the heat resistance remarkably improves. On this occasion, the use of amount of the titanium alkoxide is preferably in a range of 5 parts by mass or less to 100 parts by mass of the alkoxysilane. If it exceeded 5 parts by mass, the brittleness of the over coating layer to be formed would be large, and the over coating layer might be easily peeled off when covering the barrier layer.

(b) Organic polymer component in sol-gel compound

As the polyvinyl alcohol-based resin and/or the ethylene-vinyl alcohol copolymer used in the present invention, the polyvinyl alcohol-based resin or the ethylene-vinyl alcohol copolymer can be respectively solely used, or the polyvinyl alcohol-based resin and the ethylene-vinyl alcohol copolymer can be used in combination. As the polyvinyl alcohol-based resin, generally, a material obtained by the saponification of polyvinyl acetate can be used. There are no particular limitations on the polyvinyl alcohol resin; it may be partially saponified polyvinyl alcohol-based resin in which several dozens% of acetate groups remain, may be a completely saponified polyvinyl alcohol in which no acetate group remains, and may be an OH group-modified polyvinyl alcohol-based resin. In the present invention, the usage of the polyvinyl alcohol-based resin and/or the ethylene-vinyl alcohol copolymer allows properties such as gas barrier properties, water resistance properties, weather resistance properties and others to improve remarkably.

When the polyvinyl alcohol-based resin and the ethylene-vinyl alcohol copolymer are used in combination, the combination ratio thereof is preferably in the level that the polyvinyl alcohol-based resin : the ethylene-vinyl alcohol copolymer = 10 : 0.05 to 10 : 6 in the mass ratio.

Also, the content of the polyvinyl alcohol-based resin and/or the ethylene-vinyl alcohol copolymer to the total amount of the alkoxide 100 parts by mass is preferably in a range of 5 parts by mass to 500 parts by mass, and more preferably in a range of 20 parts by mass to 200 parts by mass in the combination ratio. If it exceeded 500 parts by mass, the brittleness of the over coating layer would be large, and the properties of the over coating layer to be obtained such as water resistance properties and weather resistance properties might be degraded in some cases. Meanwhile, if it is lower than 5 parts by mass, gas barrier properties may be degraded in some cases.

In the polyvinyl alcohol-based resin and/or the ethylene-vinyl alcohol copolymer, as the polyvinyl alcohol-based resin, generally, a material obtained by the saponification of polyvinyl acetate can be used. There are no particular limitations on the polyvinyl alcohol-based resin; it may be partially saponified polyvinyl alcohol-based resin in which several dozens% of acetate groups remain, may be a completely saponified polyvinyl alcohol in which no acetate group remains, and may be an OH group-modified polyvinyl alcohol-based resin. As such a polyvinyl alcohol-based resin, an RS polymer from KURARAY CO., LTD., "RS-110 (degree of saponification = 99%, degree of polymerization = 1,000)", "KURARAY POVAL™LM-20SO (degree of saponification = 40%, degree of polymerization = 2,000)"; and "GOHSENOL™NM-14 (degree of saponification = 99%, degree of polymerization = 1,400)" from THE NIPPON SYNTHETIC CHEMICAL INDUSTRY CO.,LTD. may be exemplified.

Also, as the ethylene-vinyl alcohol copolymer, a saponified product of ethylene and vinyl acetate that is obtained by the saponification of an ethylene-vinyl acetate random copolymer, can be used. There are no particular limitations on the saponified product; it includes from a partially saponified product in which several dozens mol% of the acetate group remains to a completely saponified product in which the acetate group remains only a few mol% or no acetate group remains . However, from the viewpoint of the gas barrier properties, as the preferable degree of saponification, the one of 80 mol% or more, more preferably 90 mol% or more, and further preferably 95 mol% or more is preferably used. Incidentally, the content of a repeated unit derived from the ethylene in the ethylene-vinyl alcohol copolymer (hereinafter also referred to as "ethylene content") is usually in a range of 0 mol% to 50 mol%, and above all, preferably in a range of 20 mol% to 45 mol%. As such an ethylene-vinyl alcohol copolymer, "EVAL™EP-F101 (ethylene content: 32 mol%)" from KRARAY CO., LTD., and "SoarnoL™D2908 (ethylene content: 29 mol%) " from The Nippon Synthetic Chemical Industry Co., Ltd. may be exemplified.

(c) Others

On the occasion of preparing a raw material solution for forming the over coating layer mainly composed of the sol-gel compound, an agent such as a silane coupling agent may be added.

As the silane coupling agent suitably usable in the present invention, already known organic reactive group-containing organoalkoxysilane can be widely used. For example, organoalkoxysilane having an epoxy group is suitable; usable examples thereof may include γ-glycidoxypropyltrimethoxysilane, γ-glycidoxypropylmethyldiethoxysilane, or β-(3,4-epoxycyclohexyl)ethyltrimethoxysilane may be used. Such a silane coupling agent may be singly used and may be used in combination of two kinds or more. Incidentally, the amount of use of the silane coupling agent is preferably in a range of 1 part by mass to 20 parts by mass to 100 parts by mass of the alkoxysilane. If 20 parts by mass or more thereof were used, the toughness and the brittleness of the over coating layer to be formed would be large, and also, the insulating properties and the processability of the over coating layer might be degraded in some cases.

Also, the sol-gel method catalyst is a catalyst mainly used as a polycondensation catalyst substantially insoluble to water and soluble to an organic solvent; a basic substance such as tertiary amine is used. For example, N,N-dimethylbenzylamine, tripropylamine, tributylamine, tripentylamine, and others can be used. In the present invention, N,N-dimethylbenzylamine is particularly suitable. The amount of use thereof to the total amount of the alkoxide and the silane coupling agent 100 parts by mass is preferably in a range of 0.01 parts by mass to 1.0 parts by mass.

Also, "acid" used in fabrication of the sol-gel compound is mainly used as a catalyst for hydrolysis of materials such as the alkoxide and the silane coupling agent in the sol-gel method. For example, mineral acids such as sulfuric acid, hydrochloric acid, and nitric acid, as well as organic acids such as acetic acid and tartaric acid and others can be used. As the amount of use of the acid, it is preferable to use in a range of 0.001 mol to 0.05 mol to the total molar amount of the alkoxide and the alkoxide portion in the silane coupling agent (such as silicate portion).

In addition, in the fabrication of the sol-gel compound, water in the ratio to the total molar amount of the alkoxide 1 mol being in a range of 0.1 mol to 100 mol, and preferably in a range of 0.8 mol to 2 mol may be used. If the amount of water exceeded 2 mol, the polymer obtained from the alkoxysilane and the metal alkoxide would be ball-shaped particles and further, these ball-shaped particles would be three-dimensionally cross-linked to each other to form a porous polymer with low density; such a porous polymer would not be able to improve the gas barrier properties of the over coating layer. Also, if the amount of water were lower than 0.8 mol, hydrolysis reaction might not proceed easily in some cases.

In addition, as the organic solvent used in fabrication of the sol-gel method, for example, methyl alcohol, ethyl alcohol, n-propyl alcohol, isopropyl alcohol, n-butanol, and others can be used. Incidentally, the polyvinyl alcohol-based resin and/or ethylene-vinyl alcohol copolymer is preferably handled in the state dissolved in a coating solution including the alkoxide and the silane coupling agent, and may be appropriately selected from the organic solvents above. For example, when the polyvinyl alcohol-based resin and the ethylene-vinyl alcohol copolymer are used in combination, it is preferable to use the n-butanol. Incidentally, the ethylene-vinyl alcohol copolymer made soluble to the solvent can also be used; for example, a material such as product name "SoarnoL™" from The Nippon Synthetic Chemical Industry Co., Ltd. can be suitably used. The amount of use of the organic solvent is, usually, to the total amount 100 parts by mass of the alkoxide, the silane coupling agent, the polyvinyl alcohol-based resin and/or the ethylene-vinyl alcohol copolymer, the acid and the sol-gel method catalyst, preferably in a range of 30 parts by mass to 500 parts by mass.

(d) Method of forming over coating layer mainly composed of sol-gel compound

In the present invention, the over coating layer mainly composed of the sol-gel compound can be produced in the below method.

First, a raw material solution is prepared by mixing the alkoxide such as the alkoxysilane, the silane coupling agent, the polyvinyl alcohol-based resin and/or the ethylene-vinyl alcohol copolymer, the sol-gel method catalyst, the acid, water, the organic solvent, and as required, a material such as the metal alkoxide. The condensation reaction of the raw material solution is initiated and proceeded by mixing thereof.

Next, the raw material solution is coated on the barrier layer of the gas barrier film in the usual manner, and dried. By this step of drying, the condensation of the materials such as the alkoxide such as alkoxysilane, the metal alkoxide, the silane coupling agent and the polyvinyl alcohol-based resin and/or the ethylene-vinyl alcohol copolymer is further proceeded to form a coating film. The operation of coating may be further repeated on a first coating film and a plurality of the coating films comprising two or more layers may be formed.

Next, the resin substrate coated with the raw material solution is heat treated for 0.05 minutes to 60 minutes at a temperature in a range of 50°C to 300°C and at a melting point of the resin substrate or less, preferably in a range of 70°C to 200°C. Thereby, a gas barrier film in which one layer or two or more layers of the over coating layer of the raw material solution is formed on the barrier layer, can be produced.

Incidentally, the over coating layer obtained by using the ethylene-vinyl alcohol copolymer solely, or the mixture composition of the polyvinyl alcohol-based resin and the ethylene-vinyl alcohol copolymer is excellent in gas barrier properties after a hydrothermal treatment. Meanwhile, when the over coating layer mainly composed of the polyvinyl alcohol-based resin solely is arranged, if an over coating layer containing the ethylene-vinyl alcohol copolymer were layered on that over coating layer, the gas barrier properties after the hydrothermal treatment would be improved.

Further, layering a plurality of both or one of the over coating layer mainly composed of the ethylene-vinyl alcohol copolymer solely, and the over coating layer mainly composed of the mixture composition of the polyvinyl alcohol-based resin and the ethylene-vinyl alcohol copolymer is also an effective measure to improve the gas barrier properties.

(4) Gas barrier film

As the barrier properties of the gas barrier film solely (1 layer), it is preferable that the initial value of oxygen permeability is 0.5 cc/(m$^2$·day·atm) or less, and above all, preferably 0.1 cc/(m$^2$·day·atm) or less. Also, the initial value of the water vapor permeability is preferably 0.5 g/(m$^2$·day) or less, and above all, preferably 0.1 g/ (m$^2$·day) or less. The oxygen and water vapor permeability of the gas barrier film is in the above described range and thus the permeation of materials such as moisture and gas permeated from outside to the core material inside the vacuum insulation material becomes difficult.

The oxygen permeability can be measured using an oxygen gas permeability measurement device (from the U.S. MOCON; OXTRAN) in the conditions of a temperature of 23°C and a humidity of 60%RH with reference to JIS K7126-2:2006 (Plastic-film and sheet-gas permeability test method-Section 2: Isopiestic method, Annex A: oxygen gas permeability test method by an electrolysis sensor method) . The measurement is conducted by installing the gas barrier film cut into a desired size in the device in the conditions of the approximate permeation area of 50 cm$^2$, a temperature of 23°C, and a humidity of 60%RH. On the occasion of the measurement, a carrier gas is supplied into the device at the flow amount of 10 cc/minute for 60 minutes or more to purge. The carrier gas usable is a nitrogen gas including approximately 5% of hydrogen. After the purge, a test gas is flowed into the device, and the measurement is conducted after securing 12 hours as the time from letting the gas flow to reach to the equilibrium state. As the test gas, dry oxygen at least 99.5% is used. The measurement of the oxygen permeability is conducted for at least three samples in one condition, and the average of the measured values thereof may be the value of the oxygen permeability in that condition.

Also, the water vapor permeability can be measured using a water vapor permeability measurement device in the conditions of a temperature of 40°C and a humidity of 90%RH in accordance with JIS K7129:2008. As the water vapor permeability device, PERMATRAN from the U. S. MOCON can be used. Incidentally, the details of the measurement method for the water vapor permeability conformable to the regulation can be the same method explained in the section "1. Characteristics of vacuum insulation material outer packing material (1) Water vapor permeability of vacuum insulation material outer packing material".

In the present invention, it is preferable that the outer packing material has two or more of the above described gas barrier film. The reason therefor is to further improve the gas barrier properties of the outer packing material. When the outer packing material has two or more of the gas barrier film, the configuration of each of the gas barrier film such as the material of the barrier layer in the gas barrier film, the material of the resin substrate, presence of the over coating layer may be the same and may be different to each other. Plurality of the gas barrier films having the same functions and characteristics may be used, and also, the gas barrier films having different functions and characteristics may be used at the position corresponding to each of the functions and the characteristics to exhibit the functions and the characteristics of each of the gas barrier film.

In addition, for example, when the outer packing material has two or more of the gas barrier film and the resin substrate of the ethylene-vinyl alcohol copolymer (EVOH) is used therein, it is preferable that the gas barrier film using the EVOH as the resin substrate is disposed in the inner side than the other gas barrier film when forming the vacuum insulation material. The EVOH has extremely low oxygen permeability in the environment with low humidity, but the oxygen barrier properties of the EVOH is easily degraded in the environment with high humidity. Accordingly, by arranging the other gas barrier film in the outer side of the vacuum insulation material which is the position arrangement restricting the amount of water vapor reaching to the EVOH can exhibit the oxygen barrier properties of the EVOH more.

In the above case, it is preferable that the gas barrier film does not include the resin substrate configured with the EVOH. It means that when the outer packing material of the present invention comprises at least a first gas barrier film including the resin substrate configured with the EVOH, and a second gas barrier film not including the resin substrate configured with the EVOH, it is preferable that the first gas barrier film is disposed at the thermally weldable film side to the second gas barrier film. Such positioning allows the second gas barrier film to inhibit the permeation of water vapor into the outer pacing material in the environment with high humidity, and thus the humidity inside the outer packing material can be kept low. Thereby, the oxygen barrier properties of the resin substrate configured with the EVOH in the first gas barrier film can be maintained even in the environment high humidity.

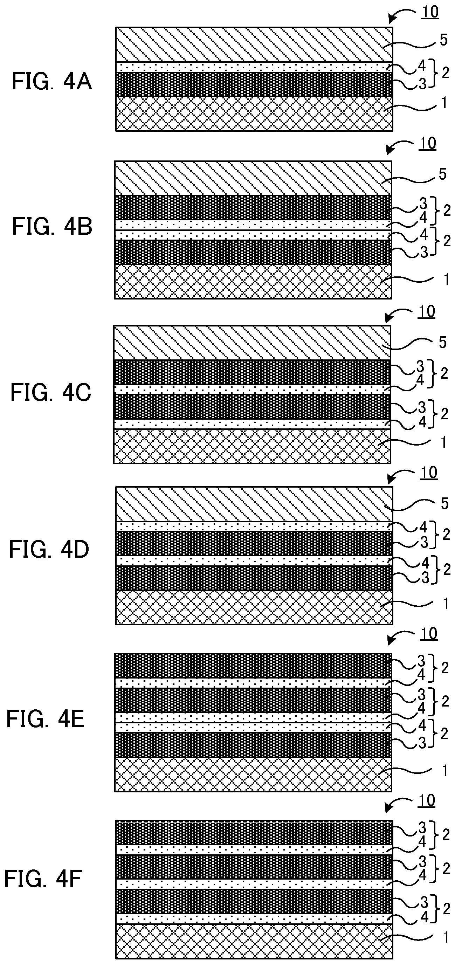

There are no particular limitations on the layering order of the resin substrate and the barrier layer; it may be appropriately set according to the factor such as the layer structure of each film and each layer other than the gas barrier film used together in the outer packing material, or the number of the gas barrier film. For example, as exemplified in FIG. 1 and FIG. 2, when the vacuum insulation material is formed using outer packing material 10, barrier layer 4 may be disposed so as to be inner side of resin substrate 3 (thermally weldable film 1 side), and also, as exemplified in FIG. 4A, when outer packing material 10 has protection film 5, barrier layer 4 may be disposed so as to be outer side of resin substrate 3 (protection film 5 side) . Further, when the outer packing material 10 has two of gas barrier film 2, as exemplified in FIG. 4B, each of barrier layer 4 may be disposed to face each other, as exemplified in FIG. 4C, both of barrier layer 4 may be disposed so as to be inner side of resin substrate 3, and as exemplified in FIG. 4D, both of barrier layer 4 may be disposed so as to be outer side of resin substrate 3. Further, as exemplified in FIG. 4E and FIG. 4F, when gas barrier film 2 is disposed at the outermost layer of the vacuum insulation material, from the viewpoint of protecting barrier layer 4, it is preferable that barrier layer 4 in gas barrier film 2 at the outermost layer is disposed so as to be inner side of resin substrate 3. Incidentally, FIGS. 4A to 4F are schematic cross sectional views illustrating other examples of the outer packing material of the present invention. On the occasion of forming the vacuum insulation material, usually, two pieces of outer packing material are disposed so as each of thermally weldable film 1 faces to each other. In the above described outer packing material 10 exemplified in FIG. 1 and FIGS. 4A to 4F, thermally weldable film 1 is disposed at the undermost layer, and thus, when forming the vacuum insulation material, the bottom side layer in these figures becomes the inner side of the vacuum insulation material, and the upper side layer is disposed at the outer side of the vacuum insulation material.

3. Thermally weldable film

The thermally weldable film in the present invention is a layer that can be thermally welded, and a portion that contacts the core material when forming the vacuum insulation material using the outer pacing material. Also, it is a portion to form the thermally weldable surface for thermally welding the edges of each facing outer packing materials.

As the material for the thermally weldable film, a thermoplastic resin is preferable since it can be melted by heating for fusion-bonding; examples thereof may include a polyolefin-based resin such as polyethylene such as straight chain short-chain branching polyethylene (LLDPE) and unstretched polypropylene (CPP), a polyester-based resin such as polyethylene terephthalate (PET), polyethylene naphthalate (PEN), and polybutylene terephthalate (PBT), a polyvinyl acetate-based resin, a polyvinyl chloride-based resin, a poly(meth)acrylic-based resin, and an urethane resin.

In the present invention, among the resins, it is preferable that the polyolefin-based resin such as polyethylene such as straight chain short-chain branching polyethylene (LLDPE) and unstretched polypropylene (CPP), and the polybutylene terephthalate (PBT) are used as the material for the thermally weldable film. The material is the above described resin and thus the generation of a crack in the gas barrier film in the edge where each of the outer packing materials are bonded when forming the vacuum insulation material can be more inhibited.

When the layer such as the thermally weldable film used together with the gas barrier film in the outer packing material is stretched, compression and tensile stress is applied to the barrier layer close in the gas barrier film nearby to easily generate a crack in the barrier layer. Accordingly, the thermally weldable film in the present invention has preferably small dimension change rate in the environment with high temperature and high humidity; it is preferably the same dimension change rate as the dimension change rate of the outer packing material described above, that is, when setting the dimension of the thermally weldable film under an atmosphere having a temperature of 25°C and a humidity of 0%RH as a reference, the dimension change rate of the thermally weldable film after holding the thermally weldable film for 2 hours under an atmosphere having a temperature of 70°C and a humidity of 90%RH is 0.8% or less, and above all, 0.7% or less, and particularly preferably 0.6% or less. It is preferable to use the resin with low water absorbency not easily swelled as the thermally weldable film among the above resins in order to form the thermally weldable film with small dimensional change rate.

The melting point of the thermally weldable film is, for example, preferably in a range of 80°C to 300°C, and above all, preferably in a range of 100°C to 250°C. If the melting point of the thermally weldable film did not satisfy the above range, the sealing surface of the outer packing material might possibly be peeled off under the environment of the usage of the vacuum insulation material formed by using the outer packing material of the present invention. Also, if the melting point of the thermally weldable film exceeded the above range, since the outer packing material needs thermal welding at a high temperature, there would be possibility that the materials used together as the outer packing material such as the gas barrier film and the protection film would be deteriorated due to heat.

Also, the thermally weldable film may include an additional material other than the above described resin such as an anti-blocking agent, a lubricant, flame retardant and organic filler.

The thickness of the thermally weldable film is, for example, preferably in a range of 15 $\mu$m to 100 $\mu$m, and above all, preferably in a range of 25 $\mu$m to 90 $\mu$m, and in particular, preferably in a range of 30 $\mu$m to 80 $\mu$m. If the thickness of the thermally weldable film were larger than the above described range, problems such as the degrade of the barrier properties of the outer packing material might occur in some cases; if the thickness is smaller than the above described range, the desired adhesiveness might not be obtained in some cases.

4. Protection film

The outer packing material of the present invention preferably comprises a protection film other than the thermally weldable film and the gas barrier film. The reason therefor is to protect each layer used together as the outer packing material such as the thermally weldable film and the gas barrier film from damage and deterioration. The protection film can be distinguished from the gas barrier film from the point that the above described barrier layer is not disposed at any surfaces thereof. There are no particular limitations on the arrangement position of the protection film in the outer packing material; however, the protection film is preferably disposed at the position that comes the outermost layer (surface layer) when forming the vacuum insulation material such as at the surface side of the gas barrier film opposite to the thermally weldable film.

The protection film may be the one using a resin with higher melting point than that of the thermally weldable film, and may be a sheet shape and may be a film shape. Examples of such a protection film may include a thermosetting resin such as a nylon-based resin, a polyester-based resin, a polyamide-based resin, a polypropylene-based resin, apolyurethane-based resin, an amino-based resin, a silicone-based resin, an epoxy-based resin, and polyimide (PI), a sheet or a film of a material such as polyvinyl chloride (PVC), polycarbonate (PC), polystyrene (PS), polyvinyl alcohol (PVA), an ethylene-vinyl acetate copolymer (EVAL), polyacrylonitrile (PAN), and cellulose nanofiber (CNF), and above all, a material such as polyethylene terephthalate (PET), polyethylene naphthalate (PEN), polybutylene terephthalate (PBT), biaxial stretching polypropylene (OPP), and polyvinyl chloride (PVC) are suitably used.

When the layer such as the protection film used together with the gas barrier film in the outer packing material is stretched, compression and tensile stress is applied to the barrier layer in the gas barrier film nearby to easily generate a crack in the barrier layer. Accordingly, the protection film in the present invention has preferably small dimension change rate in the environment with high temperature and high humidity; it is preferably the same dimension change rate as the dimension change rate of the outer packing material described above, that is, when setting the dimension of the protection film under an atmosphere having a temperature of 25°C and a humidity of 0%RH as a reference, the dimension change rate of the protection film after holding the protection film for 2 hours under an atmosphere having a temperature of 70°C and a humidity of 90%RH is 0.8% or less, and above all, 0.7% or less, and particularly preferably 0.6% or less. It is preferable to use the resin with low water absorbency not easily swelled as the protection film among the above resins in order to form the protection film with small dimensional change rate.

It is preferable that the protection film has, when forming the vacuum insulation material using the outer packing material of the present invention, enough strength to protect inside of the vacuum insulation material, and excellent properties such as heat resistance properties, pinhole resistance properties, and thrust resistance properties. Also, it is preferable that the protection film has gas barrier properties such as oxygen barrier properties and water vapor barrier properties.

The protection film may be a single layer, and may be a multilayer in which layers comprising the same material or layers comprising different materials are layered. Also, the protection film may be subjected to a surface treatment such as a corona discharge treatment from the point that can achieve the improvement in the adhesiveness with the other layers.

There are no particular limitations on the thickness of the protection film if the thickness is capable of protecting the thermally weldable film and the gas barrier film, but it is generally approximately in a range of 5 $\mu$m to 80 $\mu$m.

5. Vacuum insulation material outer packing material

There are no particular limitations on the thickness of the outer packing material if it allows the desired barrier properties and strength to be obtained; however, for example, it is preferably in a range of 30 $\mu$m to 200 $\mu$m, and above all, it is preferably in a range of 50 $\mu$m to 150 $\mu$m. Also, the tensile strength of the outer packing material is, preferably 50 N/15 mm or more, and above all, preferably 80 N/15 mm or more. The reason therefor is that a problem such as the breakage does not easily occurs when bending the vacuum insulation material formed by using the outer packing material of the present invention. Incidentally, the tensile strength is a value measured based on JIS Z1707.

There are no particular limitations on the method for layering the outer packing material if it allows the outer packing material with the desired structure to be obtained, and already known methods can be used. Examples thereof may include a dry lamination method in which an adhesive is used to bond each film formed in advance, and a method in which each material for the gas barrier film melted by heat is extruded using a tool such as a T-die and bonded, and the thermally weldable film is bonded to the obtained layered body via an adhesive.

The initial oxygen permeability of the outer packing material is preferably 0.1 cc/(m$^2$·day·atm) or less, and above all, preferably 0.05 cc/ (m$^2$·day·atm) or less. The outer packing material has the initial gas barrier properties in the above range and the gas barrier film not easily deteriorated, so as to form the vacuum insulation material having high insulating properties even if it is exposed to the environment with high temperature and high humidity for a long time. The gas barrier properties in the range described above can be achieved by means such as using a plurality of the gas barrier film as described above. Incidentally, the method for measuring the initial oxygen permeability of the outer packing material is the same as the measurement method for each permeability of the gas barrier film explained in "2. Gas barrier film, (4) Gas barrier film" above; thus, the explanation herein is omitted. On the occasion of the measurement, among the surfaces of the outer packing material cut into a desired size, in the thickness direction (also called the layered direction; likewise hereinafter) of the outer packing material, the measurement is conducted so as the outermost surface of the outer packing material in the opposite side of the thermally weldable film contacts the oxygen gas when installing the outer packing material in the device.

B. Vacuum insulation material

Next, the vacuum insulation material of the present invention is explained. The vacuum insulation material of the present invention is a vacuum insulation material comprising a core material and a vacuum insulation material outer packing material enclosing the core material, characterized in that the vacuum insulation material outer packing material comprises a thermally weldable film and a gas barrier film; the gas barrier film comprises a resin substrate, and a barrier layer disposed at least one surface side of the resin substrate; and when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

The vacuum insulation material of the present invention may be the same as that exemplified in FIG. 2 which has already been explained. According to the present invention, the vacuum insulation material outer packing material is the above described vacuum insulation material outer packing material so as to allow the vacuum insulation material to be capable of maintaining the insulating properties for a long period of time even in the environment with high temperature and high humidity.

The vacuum insulation material of the present invention comprises at least the vacuum insulation material outer packing material and a core material.

The vacuum insulation material of the present invention is hereinafter explained in each constitution.

1. Vacuum insulation material outer packing material

The vacuum insulation material outer packing material of the present invention is to enclose the core material. Also, the vacuum insulation material outer packing material is the above described vacuum insulation material outer packing material of the present invention. Such a vacuum insulation material outer packing material can be in the same contents as those described in the section "A. Vacuum insulation material outer packing material"; thus, the explanations herein are omitted.

Incidentally, to enclose means to seal inside a bag body formed using the outer packing material.

2. Core material

The core material in the present invention is enclosed in the vacuum insulation material outer packing material.

It is preferable that the core material has low thermal conductivity. It is preferable that the core material is aporous material with the void of 50% or more, and in particular, 90% or more.

As the material configuring the core material, a material such as a powder body, a foamed body, and a fiber body can be used.

The powder body may be inorganic and organic; for example, a material such as dried silica, wet silica, aggregated silica powder, conductive powder, calcium carbonate powder, perlite, clay, and talc can be used. Among them, a mixture of the dry silica and the conductive powder is advantageous for the usage in the temperature range where inside pressure increases, since the deterioration of the insulating properties along with the increase of the pressure inside the vacuum insulation material is small. In addition, if a substance with small infrared ray absorbency such as a titanium oxide, an aluminum oxide, and an indium-doped tin oxide is added as a radiation inhibitor, the infrared ray absorbency of the core material can be decreased.

Also, as the foamed body, there are urethane foam, styrene foam, and phenol foam. Among them, a foamed body that forms continuous foam is preferable.

Also, the fiber body may be inorganic fiber and may be organic fiber, but usage of the inorganic fiber is preferable from the viewpoint of the insulating properties. Examples of such an inorganic fiber may include glass fiber such as glass wool and glass fiber, alumina fiber, silica alumina fiber, silica fiber, ceramic fiber, and rock wool. These inorganic fibers are preferable from the points that they are low in thermal conductivity and more easily handled than the powder body.

As the core material, the above described material may be used solely, and it may be a composite material in which two or more kinds of the material are mixed.

3. Vacuum insulation material

The vacuum insulation material of the present invention is in a vacuum state decompressing and sealing the inside enclosed by the vacuum insulation material outer packing material. The degree of vacuum inside the vacuum insulation material is preferably 5 Pa or less. The degree of vacuum inside the vacuum insulation material in the above range allows the thermal conduction caused by convection of air remaining inside to be small so as to exhibit excellent insulating properties.

Also, the thermal conductivity of the vacuum insulation material is preferably low; for example, the thermal conductivity of the vacuum insulation material at 25°C (the initial thermal conductivity) is, preferably 15 mW/m·K or less, and above all, preferably 10 mW/m·K or less, and in particular, preferably 5 mW/m·K or less. The thermal conductivity of the vacuum insulation material is in the above range, and thus the vacuum insulation material does not easily conduct heat outside so as to exhibit high insulating effect. Incidentally, the thermal conductivity can be a value measured by a heat flow measurement method using a thermal conductivity measurement device in accordance with JIS A1412-2. Examples of the thermal conductivity measurement device may include a thermal conductivity measurement device Auto Λ (Product name HC-074 from EKO Instruments).

In detail, the measurement of the thermal conductivity is performed by a heat flow measurement method in conformity of JIS A1412-2:1999 (method for measuring the thermal resistance and thermal conductivity of insulating material-Section 2: Heat flow measurement method (HFM method) placing the both of the main surfaces of the vacuum insulation material as a measurement sample to face up and down directions in the thermal conductivity measurement device in the below conditions. Before the thermal conductivity measurement, it is preferable to measure if the temperature of the measurement sample is equal to the temperature of the measurement environment using a tool such as a heat flow meter in advance. At least three samples are measured in one condition and the average of the measured values is the value of the thermal conductivity in that condition.

<Conditions for thermal conductivity measurement>

- Measurement sample: width 29cm ± 0.5cm, length 30cm ± 0.5cm
- Time required for steady state of test: 15 minutes or more
- Kind of standard plate: EPS
- Temperature of high temperature surface: 30°C
- Temperature of low temperature surface: 10°C
- Average temperature of measurement sample: 20°C

It is preferable that the gas barrier properties of the vacuum insulation material are high. The reason therefor is to prevent the degree of vacuum from being degraded due to infiltration of substance such as moisture and oxygen from outside. The gas barrier properties of the vacuum insulation material are the same as the water vapor permeability explained in the section "A. Vacuum insulation material outer packing material 1. Characteristics of vacuum insulation material outer packing material (1) Water vapor permeability of vacuum insulation material outer packing material" described above, and the oxygen permeability explained in the section "A. Vacuum insulation material outer packing material 5. Vacuum insulation outer packing material" described above; thus, the explanations herein are omitted.

4. Production method

As the method for producing the vacuum insulation material of the present invention, general methods can be used. For example, the vacuum insulation material in which the core material is enclosed in the outer packing material can be obtained by preparing the above described outer packing material in advance, facing two pieces of the outer packing material so as each of the thermally weldable films face inner side, disposing the core material therebetween, and thermally welding three edges of the outer packing materials leaving one side of periphery of the core material as an opening using a device such as a bag making machine to prepare a bag body formed from the two pieces of the outer packing material in which the core material is disposed inside, and then, installing the bag body to a vacuum sealing machine and sealing the opening in the state the pressure inside the bag body is decompressed.

Also, the production method may be a method to obtain the vacuum insulation material in which the core material is enclosed in the outer packing material by facing the thermally weldable film side of one piece of the outer packing material to inner side, disposing the core material therebetween, leaving one side of periphery of the core material as an opening and thermally welding the edges of the remaining two sides of the outer packing material to prepare a bag body formed by one piece of the outer packing material in which the core material is disposed inside, and then installing the bag body to the vacuum sealing machine and sealing the opening in the state the pressure inside the bag body is decompressed.

5. Application

The vacuum insulation material of the present invention has low thermal conductivity, and is excellent in insulating properties and durability even in the environment with high temperature and high humidity. Accordingly, the vacuum insulation material may be applied to a part that has a heat source and generates heat, and a part that becomes high temperature when heated from outside. Examples of the application of the present invention may include devices explained in "C. Article with vacuum insulation material", a cooler box, a container for transportation, a tank for fuel such as hydrogen, a system bath, a hot-water tank, a heat-keeping chamber, a house wall, a vehicle, an airplane, a vessel, and a railroad train.

C. Article with vacuum insulation material

Next, the article with the vacuum insulation material of the present invention is explained. The article with the vacuum insulation material of the present invention is an article with a vacuum insulation material provided with an article including a thermal insulation region and a vacuum insulation material, characterized in that the vacuum insulation material comprises a core material and a vacuum insulation material outer packing material enclosing the core material; the vacuum insulation material outer packing material comprises a thermally weldable film and a gas barrier film; the gas barrier film comprises a resin substrate, and a barrier layer disposed at least one surface side of the resin substrate; and when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

According to the present invention, the vacuum insulation material provided in the article is the vacuum insulation material using the outer packing material explained in the section "A. Vacuum insulation material outer packing material", and capable of maintaining the insulating properties under the environment with a high temperature for a long period of time; thus, the article can have excellent insulating properties.

Here, the thermal insulation region is a region thermally insulated by the vacuum insulation material; examples are the region kept hot or cool, the region surrounding the heat source or cool source, and the region isolated from the heat source and cool source. These regions may be a space and may be an object.

Also, there are no particular limitations on the article in the present invention if it requires thermal insulation; examples thereof may include electronic devices such as a refrigerator, a freezer, a heat-keeping device, and a cool-keeping device, containers such as a heat-keeping container, a cool-keeping container, a container for transportation, a container, and a storing container, conveyance for transporting such as a vehicle, an airplane, and a vessel, buildings such as a house and a storehouse, and constructional materials such as a wall material and a flooring material.

Specific examples of the article with the vacuum insulation material of the present invention may include a device having a heat source part or heat-kept part in the main body or inside, and the device with the vacuum insulation material provided with a vacuum insulation material.

Here, the "heat source part" refers to a part of the main body of the device or inside the device that generates heat when driving the device itself, such as a power and a mortar. Also, the "heat-kept part" refers to a part that does not have a heat source in the main body of the device or inside, but becomes high temperature when the device receives heat from a heat source outside.

According to the present invention, the vacuum insulation material is the above described vacuum insulation material and capable of maintaining the insulating properties for a long period of time even in the environment with high temperature and high humidity, and thus, in the device having a heat source, the heat from the heat source is insulated by the vacuum insulation material to prevent the temperature of the device overall from being high, and meanwhile, in the device having the heat-kept part, the state of the temperature in the heat-kept part can be kept by the vacuum insulation material. Thereby, the device can have high energy saving properties restraining the power consumption.

The vacuum insulation material in the present invention is in the same contents as those explained in the section "B. Vacuum insulation material" described above; thus, the explanations herein are omitted.

The device in the present invention has the heat source or the heat-kept part in the main body or inside the main body. Examples of the device in the present invention may include electronic devices such as a natural refrigerant heat pump water heating and supply system (registered trademark "Eco-Cute"), a refrigerator, a vending machine, a rice cooker, a vacuum bottle, a microwave oven, an oven for business use, IH-cooking heater, and OA equipment, an automobile, and a house wall. Among them, in the present invention, it is preferable that the device is the natural refrigerant heat pump water heating and supply system, the oven for business use, the microwave oven, the automobile, and the house wall, and the above described vacuum insulation material of the present invention is used in these devices.

As the form of installing the vacuum insulation material to the device, the vacuum insulation material may be directly bonded to the heat source part or the heat-kept part of the device, and the vacuum insulation material may be installed so as to be sandwiched between the heat-kept part and the heat source part or the heat source outside.

D. Method for designing vacuum insulation material outer packing material

Next, the method for designing the vacuum insulation material outer packing material of the present invention is explained. The method for designing the vacuum insulation material outer packing material of the present invention is a method for designing a vacuum insulation material outer packing material comprising a thermally weldable film, and a gas barrier film comprising a resin substrate and a gas barrier layer disposed at least one surface side of the resin substrate characterized in that a layer structure of the vacuum insulation material outer packing material is designed so as a dimension change rate of the vacuum insulation material outer packing material becomes 0.8% or less after the vacuum insulation material outer packing material is held for 2 hours under an atmosphere having a temperature of 70°C and a humidity of 90%RH, when setting a dimension of the vacuum insulation material outer packing material under an atmosphere having a temperature of 25°C and a humidity of 0%RH as a reference.

According to the present invention, the layer structure of the outer packing material is designed so as to be the outer packing material having the above described dimension change rate, and thus the outer packing material that can form the vacuum insulation material capable of maintaining the insulation properties for a long period of time even in the environment with high temperature and high humidity can be designed.

In the method for designing the vacuum insulation material outer packing material of the present invention, as explained in the section "A. Vacuum insulation material outer packing material" described above, the layer structure of the outer packing material is designed so as the dimension change rate in the environment with high temperature and high humidity is in the specific range to allow the outer packing material to form the vacuum insulation material capable of maintaining the insulating properties for a long period of time even in the environment with high temperature and high humidity. The method for designing such an outer packing material is the same as the descriptions in the section "A. Vacuum insulation material outer packing material" described above; thus, the explanations herein are omitted.

E. Method for producing vacuum insulation outer packing material

Next, the method for producing the vacuum insulation material outer packing material of the present invention is explained. The method for producing the vacuum insulation material outer packing material of the present invention is a method for producing a vacuum insulation material outer packing material comprising a thermally weldable film, and a gas barrier film comprising a resin substrate and a gas barrier layer disposed at least one surface side of the resin substrate, the method is characterized by comprising designing step of designing a layer structure of the vacuum insulation material outer packing material so as a dimension change rate of the vacuum insulation material outer packing material becomes 0.8% or less after the vacuum insulation material outer packing material is held for 2 hours under an atmosphere having a temperature of 70°C and a humidity of 90%RH, when setting a dimension of the vacuum insulation material outer packing material under an atmosphere having a temperature of 25°C and a humidity of 0%RH as a reference .

According to the present invention, the designing step is included and thus the outer packing material that can form the vacuum insulation material capable of maintaining the insulating properties for a long period of time even in the environment with high temperature and high humidity can be produced.

In the method for producing the vacuum insulation material outer packing material of the present invention, in the designing step, as explained in the section "A. Vacuum insulation material outer packing material" described above, the layer structure of the outer packing material is designed so as the dimension change rate in the environment with high temperature and high humidity is in the specific range and thus the outer packing material can form the vacuum insulation material capable of maintaining the insulating properties for a long period of time even in the environment with high temperature and high humidity. Such a designing step is the same as the descriptions in the section "A. Vacuum insulation material outer packing material" described above; thus, the explanations herein are omitted.

In the present invention, there are no particular limitations on each step other than the above described designing step; it may be the same as each step in a general method for producing an outer packing material. Examples thereof may include a dry lamination step of bonding each layer film-formed in advance using an adhesive, and a bonding step of bonding each material of the gas barrier film heat-melted by extruding using a tool such as a T-die and bonding the thermally weldable film to the obtained layered body via an adhesive.

Incidentally, the present invention is not limited to the embodiments. The embodiments are exemplification, and any is included in the technical scope of the present invention if it has substantially the same constitution as the technical idea described in the claim of the present invention and offers similar operation and effect thereto.

Examples

The present invention is described in further detail by hereinafter showing Examples and Comparative Examples.

[Example 1]

Fabrication of adhesive

A main agent mainly composed of polyester, a curing agent including an aliphatic polyisocyanate, and ethyl acetate were mixed so as to be the main agent : the curing agent : the ethyl acetate = 10 : 1 : 14 in the weight compounding ratio to fabricate a two-pack curing type adhesive.

Fabrication of vacuum insulation material outer packing material

An outer packing material having a layer structure of a thermally weldable film / a first gas barrier film / a second gas barrier film / a protection film was fabricated. As the thermally weldable film, a 50 $\mu$m thick straight chain short chain branching polyethylene film (TUX-HCE from Mitsui Chemicals Tohcello, Inc.) was used. As the first gas barrier film, a 12 $\mu$m thick ethylene-vinyl alcohol copolymer film having an aluminum deposition film on one surface (VMXL from KURARAY CO., LTD.) was used. As the second gas barrier film, a 12 $\mu$m thick polyethylene terephthalate (PET) film having an aluminum deposition film on one surface (VM-PET1510 from Toray Industries, Inc.) was used. As the protection film, a 25 $\mu$m thick PET film (Lumirror™25QGG2 from Toray Industries, Inc.) was used. Each of the layer was layered by a dry lamination method in the manner that the adhesive prepared in the above described ratio was coated on the surface of the layer that came bottom in the coating amount of 3.5 g/m$^2$.

In the outer packing material, the first gas barrier film was disposed so that the aluminum deposition layer came to the second gas barrier film side to the ethylene-vinyl alcohol copolymer film, and the second gas barrier film was disposed so that the aluminum deposition layer came to the first gas barrier film side to the PET film. Incidentally, in the layer structure of the outer packing material, "/" refers to an interface of the layers, and hereinafter the same is applicable.

[Example 2]

An outer packing material was obtained in the same manner as in Example 1 except that a 25 $\mu$m thick polybutylene terephthalate (PBT) film (CTG-25 from Unitika Limited) was used as the thermally weldable film.

[Example 3]

An outer packing material was obtained in the same manner as in Example 2 except that a 15 $\mu$m thick nylon film (Emblem NX-15 from Unitika Limited) was used as the protection film.

[Example 4]

An outer packing material was obtained in the same manner as in Example 3 except that a 30 $\mu$m thick

polyethylene terephthalate (PET) film (Coxec from KURABO INDUSTRIES LTD.) was used as the thermally weldable film.

[Comparative Example 1]

An outer packing material was obtained in the same manner as in Example 1 except that a 25 $\mu$m thick nylon film (Emblem ONBC from Unitika Limited) was used as the protection film.

[Example 5]

An outer packing material having a layer structure of a thermally weldable film / a first gas barrier film / a second gas barrier film / a third gas barrier film was fabricated in the same manner as in Example 1. As the thermally weldable film, a 50 $\mu$m thick unstretched polypropylene film (SC from Mitsui Chemicals Tohcello, Inc.) was used. As the first gas barrier film, a 15 $\mu$m thick ethylene-vinyl alcohol copolymer (EVOH) film having an aluminum deposition film on one surface (TMXL from KURARAY CO., LTD.) was used. As the second gas barrier film and the third gas barrier film, a 12 $\mu$m thick polyethylene terephthalate (PET) film having a metal oxide phosphate layer on one surface (Kurarister™ CF from KURARAY CO. LTD.) was respectively used.
In the outer packing material, the first gas barrier film was disposed so that the aluminum deposition layer came to the second gas barrier film side to the EVOH film. The second gas barrier film was disposed so that the metal oxide phosphate layer came to the first gas barrier film side to the PET film. The third gas barrier film was disposed so that the metal oxide phosphate layer came to the second gas barrier film side to the PET film.

[Example 6]

Fabrication of composition for barrier coating film

An A solution (a mixture solution comprising polyvinyl alcohol, isopropyl alcohol and ion exchanged water) was prepared in accordance with the composition shown in Table 1, a B solution (a hydrolysis solution comprising tetraetoxysilane (TEOS), isopropyl alcohol, chloric acid and ion exchange water) prepared in advance in accordance with the composition shown in Table 1 was added to the A solution and stirred to obtain colorless and transparent composition for a barrier coating film by a sol-gel method.

[Table 1]

| Composition for a barrier coating film | | |
|---|---|---|
| A solution | Polyvinyl alcohol | 1.81 |
| | Isopropyl alcohol | 39.8 |
| | $H_2O$ | 2.09 |
| B solution | TEOS | 21.49 |
| | Isopropyl alcohol | 5.03 |
| | 0.5 N Chloric acid solution | 0.69 |
| | $H_2O$ | 29.1 |
| Total | | 100 (wt%) |

Fabrication of vacuum insulation material outer packing material

An outer packing material having a layer structure of a thermally weldable film / a first gas barrier film / a second gas barrier film / a protection film was fabricated in the same manner as in Example 1. As the thermally weldable film, a 50 $\mu$m thick unstretched polypropylene film (SC from Mitsui Chemicals Tohcello, Inc.) was used. As the first gas barrier film and the second gas barrier film, a gas barrier film having a silicon oxide ($SiO_2$) film (20 nm thick) on one surface of a 12 $\mu$m thick polyethylene terephthalate (PET) film (PET-F from Unitika Limited) and a barrier coating film (300 nm thick) on the $SiO_2$ layer, was respectively used. The $SiO_2$ film was formed on one surface of the PET film by a vapor deposition method. The barrier coating film was formed by coating the composition for barrier coating film prepared in the above described method on the $SiO_2$ film by a gravure coating method and then heat treating at 120°C, 140°C, and 150°C for 20 seconds respectively. As the protection film, a 15 $\mu$m thick barrier nylon film (IB-ON-UB from Dai Nippon Printing Co., Ltd.) was used.

In the outer packing material, the first gas barrier film was disposed so that the $SiO_2$ film came to the second gas barrier film side to the PET film. The second gas barrier film was disposed so that the $SiO_2$ film came to the first gas barrier film side to the PET film.

[Example 7]

An outer packing material having a layer structure of a thermally weldable film / a first gas barrier film / a second gas barrier film / a third gas barrier film was fabricated in the same manner as in Example 1. As the thermally weldable film, a 50 $\mu$m thick unstretchedpolypropylene (SC from Mitsui Chemicals Tohcello, Inc.) was used. As the first gas barrier film, a 15 $\mu$m thick ethylene-vinyl alcohol copolymer (EVOH) film having an aluminum deposition film on one surface (TMXL from KURARAY CO., LTD.) was used. As the second gas barrier film and the third gas barrier film, a 12 $\mu$m thick polyethylene terephthalate (PET) film having an aluminum deposition film on one surface (VM-PET1519 from Toray Advanced Film Co., Ltd.) was respectively used.

In the outer packing material, the first gas barrier film was disposed so that the aluminum deposition film came to the second gas barrier film side to the EVOH film. The second gas barrier film was disposed so that the aluminum deposition film came to the first gas barrier film side to the PET film. The third gas barrier film was disposed so that the aluminum deposition film came to the second gas barrier film side to the PET film.

[Example 8]

An outer packing material having a layer structure of a thermally weldable film / a first gas barrier film / a second gas barrier film / a protection film was fabricated in the same manner as in Example 1. As the thermally weldable film, a 50 $\mu$m thick unstretched polypropylene (SC from Mitsui Chemicals Tohcello, Inc.) was used. As the first gas barrier film, a 15 $\mu$m thick ethylene-vinyl alcohol copolymer (EVOH) film having an aluminum deposition film on one surface (TMXL from KURARAY CO., LTD.) was used. As the second gas barrier film, a 12 $\mu$m thick polyethylene terephthalate (PET) film having a metal oxide phosphate layer on one surface (Kurarister™ CF from KURARAY CO. LTD.) was used. As the protection film, a 15 $\mu$m thick barrier nylon film (IB-ON-UB from Dai Nippon Printing Co., Ltd.) was used.

In the outer packing material, the first gas barrier film was disposed so that the aluminum deposition film came to the second gas barrier film side to the EVOH film. The second gas barrier film was disposed so that the metal oxide phosphate layer came to the first gas barrier film side to the PET film.

[Example 9]

An outer packing material having a layer structure of a thermally weldable film / a first gas barrier film / a second gas barrier film / a protection film was fabricated in the same manner as in Example 1. As the thermally weldable film, a 50 $\mu$m thick unstretched polypropylene (SC from Mitsui Chemicals Tohcello, Inc.) was used. As the first gas barrier film, a 15 $\mu$m thick ethylene-vinyl alcohol copolymer (EVOH) film having an aluminum deposition film on one surface (TMXL from KURARAY CO., LTD.) was used. As the second gas barrier film, a gas barrier film having a 12 $\mu$m thick polyethylene terephthalate (PET) with silicon oxide ($SiO_2$) on one surface (TECHBARRIER™LX from Mitsubishi Chemical Corporation) and a barrier coating layer (thickness: 300 nm) on the $SiO_2$ film, was used. The barrier coating layer was formed in the same method as in Example 6 using the composition for barrier coating film prepared in Example 6. As the protection film, a 15 $\mu$m thick barrier nylon film (IB-ON-UB from Dai Nippon Printing Co., Ltd.) was used.

In the outer packing material, the first gas barrier film was disposed so that the aluminum deposition film came to the second gas barrier film side to the EVOH film. The second gas barrier film was disposed so that the $SiO_2$ film came to the first gas barrier film side to the PET film.

[Evaluation 1: Dimension change rate of outer packing material (by a regular method)]

The dimension and the dimension change rate of the outer packing material were obtained by a regular method. First, a test piece in a desired size (test piece number N = 1) was cut out from the outer packing material of Example 1 in accordance with the method for collecting the measurement sample in the regular method explained in the section "A. Vacuum insulation material outer packing material 1. Dimension change rate of vacuum insulation material outer packing material (2) Dimension change rate of vacuum insulation material outer packing material", and 8 pieces of the measurement sample were collected from the test piece.

Next, regarding each of the measurement sample, the dimension $L_0$ of the measurement sample under an atmosphere having a temperature of 25°C and a humidity of 0%RH before raising temperature and humidity as the initial dimension and the dimension L of the measurement sample after being held for 2 hours under an atmosphere having a temperature of 70°C and a humidity of 90%RH as the dimension in the humid and hot atmosphere were measured by the regular method explained in the section "A. Vacuum insulation material outer packing material 1. Dimension change rate of vacuum insulation material outer packing material (2) Dimension change rate of vacuum insulation material outer packing material". The dimension of the measurement sample was chronologically measured using a thermomechanical analyzer (TMA/SS7100 from Hitachi High-Tech Science Corporation) in a series of steps: a temperature raising step up to a temperature rising termination temperature of 70°C with a fixed humidity from a temperature rising starting temperature of 25°C and a humidity rising starting humidity of 0%RH; a sequential humidity raising step up to a humidity of humidity rising termination humidity of 90%RH at the fixed temperature; a sequential constant temperature and constant humidity step to hold the sample for 2 hours under the atmosphere having a temperature of 70°C and a humidity of 90%RH; and a sequential temperature lowering and humidity lowering step to lower the temperature to a temperature of 25°C and lower the humidity to a humidity of 0%RH. The measurement was conducted in a pulling mode with a load of 400 mN/mm$^2$, the details of the measurement conditions were according to the "Conditions for dimension measurement by TMA" described in the section above.

The dimension change rate (%) of the measurement sample was calculated from the obtained dimension $L_0$ and dimension L of the measurement sample with the below formula (4), and the average of the 8 pieces was determined as the dimension change rate of the outer packing material in the environment with high temperature and high humidity.

$$\text{Dimension change rate in environment with high temperature and high humidity (\%)} = (L - L_0)/L_0 \times 100 \dots (4)$$

Also, the dimension $L_1$ of the measurement sample under an atmosphere having a temperature of 25°C and a humidity of 0%RH after the temperature lowering and humidity lowering step was measured, the dimension change rate (%) of the measurement sample was calculated from the dimension $L_0$ and the dimension $L_1$ with the below formula (5), and the average of the 8 pieces was determined as the dimension change rate of the outer packing material after the temperature lowering and humidity lowering step.

$$\text{Dimension change rate after temperature lowering and humidity lowering step (\%)} = (L_1 - L_0)/L_0 \times 100 \dots (5)$$

The dimension measurement for the outer packing materials of Examples 2 to 9 and Comparative Example 1 was respectively conducted in the same manner, and the dimension change rate in the environment with high temperature and high humidity and the dimension change rate after the temperature lowering and humidity lowering step were calculated.

The result of the dimension change rate in the environment with high temperature and high humidity and the dimension change rate after the temperature lowering and humidity lowering step of Examples 1 to 9 and Comparative Example 1 are respectively shown in Table 2.

[Evaluation 2: Water vapor permeability of outer packing material after being held for 100 hours under atmosphere having temperature of 70°C and humidity of 90%RH]

Regarding each of the outer packing material obtained in each of the Example and Comparative Example, the measurement of the initial water vapor permeability and the measurement of water vapor permeability after the outer packing material was held for 100 hours under an atmosphere having a temperature of 70°C and a humidity of 90%RH were conducted in the following procedures. First, two pieces of the outer packing material were prepared, the two pieces of the outer packing material were faced so that each thermally weldable film faced each other, and all around of the periphery of the outer packing material was thermally welded in the state nothing was enclosed inside the outer packing material to form a sealed bag body. The thermal welding was conducted under an air pressure, and the inside of the bag body was not decompressed.

The bag body was formed by the same method as for the test piece explained in the section "A. Vacuum insulation material outer packing material 1. Characteristics of vacuum insulation material outer packing material (1) Water vapor permeability of vacuum insulation material outer packing material" described above.

The outer packing material in a part not thermally welded in each of the sealed bag body formed by the method above was cut out, and the water vapor permeability of the cut out outer packing material was measured. The measurement results are shown in Table 2 ("0 hour" in Table 2). Also, each of the sealed bag body formed by the method above was held for 100 hours under an atmosphere having a temperature of 70°C and a humidity of 90%RH, and thereafter the outer packing material in a part not thermally welded in each of the sealed bag body held as above was cut out, and the water vapor permeability of the cut out outer packing material was measured. The measurement results are shown in Table 2 ("100 hours" in Table 2). Incidentally, the water vapor permeability of each of the outer packing material was measured under an atmosphere having a temperature of 40°C and a humidity of 90%RH using a water vapor permeability measurement device (PARAMATRAN from the U. S. MOCON) in accordance with JIS K7129:2008.

The details of the size cut out from the bag body and the measurement method by the water vapor permeability measurement device were according to the details explained in the section "A. Vacuum insulation material outer packing material 1. Characteristics of vacuum insulation material outer packing material (1) Water vapor permeability of vacuum insulation material outer packing material" described above except that the hold time was changed to 100 hours.

[Evaluation 3: Water vapor permeability of outer packing material after being held for 100 hours under atmosphere having temperature of 70°C and humidity of 0%RH or atmosphere having temperature of 40°C and humidity of 90%RH]

Regarding the outer packing materials in Examples 1 to 2 and Comparative Example 1, the water vapor permeability after being held for 100 hours under an atmosphere having a temperature of 70°C and a humidity of 0%RH and the water vapor permeability after being held for 100 hours under an atmosphere having a temperature of 40°C and a humidity of 90%RH were respectively measured using a water vapor permeability measurement device (PARMATRAN from the U.S. MOCON) in accordance with JIS K7129:2008. The details for the method and procedures for the measurement were the same as the details of the method and procedures explained in the section "A. Vacuum insulation material outer packing material 1. Characteristics of vacuum insulation material outer packing material (1) Water vapor permeability of vacuum insulation material outer packing material" described above, except that the outer packing material was cut out in a desired size for the measurement after holding the outer packing material for 100 hours under each atmosphere.

Regarding the outer packing materials in Examples 1 to 2 and Comparative Example 1, each of the water vapor permeability in the initial stage, after being held for 100 hours under the atmosphere having a temperature of 70°C and a humidity of 0%RH and after being held for 100 hours under the atmosphere having a temperature of 40°C and a humidity of 90%RH is shown in FIG. 5. Also, the water vapor permeability after being held for 100 hours under the atmosphere having a temperature of 70°C and a humidity of 90%RH measured in Evaluation 3 is shown in FIG. 5.

[Evaluation 4: Water vapor permeability of outer packing material per 100 hours under atmosphere having temperature of 70°C and humidity of 90%RH]

Regarding the outer packing materials in Examples 5 to 9, the water vapor permeability after being held for 0 hour, 100 hours, 200 hours, 300 hours, 400 hours, and 500 hours was respectively measured using a water vapor permeability measurement device (PARMATRAN from the U. S. MOCON) in accordance with JIS K7129:2008 under an atmosphere having a temperature of 40°C and a humidity of 90%RH. The method and details for the measurement were the same as the details of the method and procedures explained in the section "A. Vacuum insulation material outer packing material 1. Characteristics of vacuum insulation material outer packing material (1) Water vapor permeability of vacuum insulation material outer packing material" described above, except that the outer packing material was held for each hold time described above and thereafter the outer packing material was cut out in a desired size for the measurement.

The results are shown in Table 2. Also, a graph of chronological changes in the water vapor permeability of the outer packing materials in Examples 5 to 9 per 100 hours under the atmosphere having a temperature of 70°C and a humidity of 90%RH are shown in FIG. 6.

[Evaluation 5: Water vapor permeability of outer packing material after bending treatment]

Regarding the outer packing materials in Examples 1 to 2 and Comparative Example 1, test pieces in rectangular of the width 210 mm by the length 297 mm (A4 size) were collected, and a bending treatment was conducted to the test pieces by Gelvo type Flex-Cracking Tester (model name: BE1006 from TESTER SANGYO CO,. LTD.) in conformity of ASTM F392. The bending treatment was conducted for each test piece 3 cycles; in 1 cycle, both narrow sides of the test piece were installed to the clamping jaws of the Gelvo type Flex-Cracking Tester, the test piece was twisted so as the maximum twist angle became 440°, shrunk in just 3.5 inch, and then further shrunk in 2.5 inch without twisting the test piece, and thereafter the test piece was returned to the initial state by a backward step.

Regarding each of the outer packing material, the water vapor permeability after the bending treatment was respectively measured using a water vapor permeability measurement device (PARMATRAN from the U.S. MOCON) in accordance with JIS K7129:2008 under an atmosphere having a temperature of 40°C and a humidity of 90%RH. The details for the method and procedures for the measurement were the same as the details of the method and procedures explained in the section "A. Vacuum insulation material outer packing material 1. Characteristics of vacuum insulation material outer packing material (1) Water vapor permeability of vacuum insulation material outer packing material" described above.

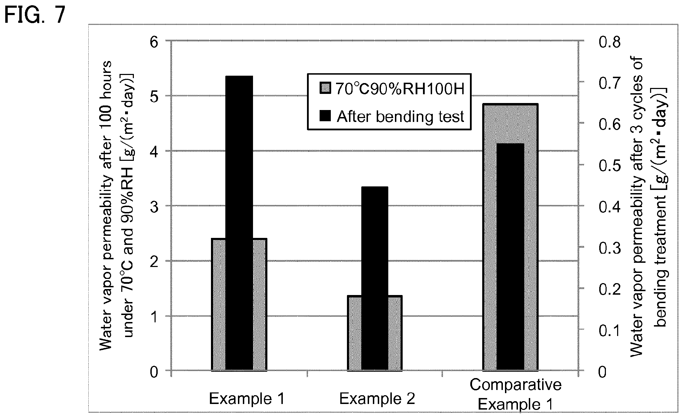

Regarding the outer packing materials in Examples 1 to 2 and Comparative Example 1, the water vapor permeability after being held for 100 hours under the atmosphere having a temperature of 70°C and a humidity of 90%RH and the water vapor permeability after the bending treatment are shown in FIG. 7.

[Evaluation 6: Water content of outer packing material]

Regarding the outer packing materials obtained in Examples 1 to 4 and Comparative Example 1, the water content after being held for 2 hours under an atmosphere having a temperature of 70°C and a humidity of 90%RH was measured by a coulometric titration method of Karl-Fischer method in conformity of JIS K0113:2005. The measurement was conducted using an integrated Karl Fischer moisture titrator (an integral interlocked model of a Karl Fischer moisture titrator MKC-510 and a moisture vaporizing device ADP-611, both from KYOTO ELECTRONICS MANUFACTURING CO., LTD.) by the method and procedures explained in the section "A. Vacuum insulation material outer packing material 1. Characteristics of vacuum insulation material outer packing material (3) Water content of vacuum insulation material outer packing material" described above. The water content of the outer packing material after being held for 2 hours under the atmosphere having a temperature of 70°C and a humidity of 90%RH was calculated from the obtained water content and the below formula (6):

$$\text{Water content (ppm)} = (G/M_s) \times 10^6 \ \dots \ (6)$$

(In the formula (6), G is the detected water content (g) in the method above, and $M_s$ is the weight of the sample (g) placed on the sample boat).

The results are shown in Table 2.

[Table 2]

| | Dimension change rate [%] | | Water vapor permeability [g/(m²·day)] | | | | | | Water content [ppm] |
|---|---|---|---|---|---|---|---|---|---|
| | 70°C90%RH2h | 25°C0%RH | 0 hours | 100 hours | 200 hours | 300 hours | 400 hours | 500 hours | 70°C90%RH2h |
| Example 1 | 0.40 | 0.01 | 0.30 | 2.40 | - | - | - | - | 7776 |
| Example 2 | 0.33 | -0.03 | 0.30 | 1.35 | - | - | - | - | 8107 |
| Example 3 | 0.32 | -0.22 | 0.30 | 1.47 | - | - | - | - | 8708 |
| Example 4 | 0.59 | -0.15 | 0.30 | 2.85 | - | - | - | - | 9480 |
| Comp. Example 1 | 0.85 | 0.05 | 0.30 | 4.84 | - | - | - | - | 12067 |
| Example 5 | 0.44 | -0.02 | 0.01 | 0.02 | 0.02 | 0.02 | 0.02 | 0.04 | - |
| Example 6 | 0.39 | 0.06 | 0.01 | 0.03 | 0.03 | 0.06 | 0.08 | 0.12 | - |
| Example 7 | 0.30 | -0.07 | 0.01 | 0.27 | 0.58 | 0.65 | 0.89 | 1.70 | - |
| Example 8 | 0.56 | 0.04 | 0.01 | 0.01 | 0.02 | 0.07 | 0.16 | 0.69 | - |
| Example 9 | 0.48 | 0.00 | 0.01 | 0.17 | 0.26 | 0.27 | 0.23 | 0.29 | - |

[Consideration 1]

From the results for Examples 1 to 9 and Comparative Example 1, it was suggested that the water vapor permeability after being held for a long time in the environment with high temperature and high humidity was low in the outer packing materials of Examples 1 to 9 of which dimension change rate after being held for 2 hours under the atmosphere having a temperature of 70°C and a humidity of 90%RH was in the specific range. On the other hand, the initial water vapor permeability of the outer packing material in Comparative Example 1 was in the same level as that of the outer packing materials in Examples 1 to 4; however, the water vapor permeability drastically rose at the stage being held for 100 hours under the atmosphere having a temperature of 70°C and a humidity of 90%RH compared to the outer packing materials in Examples 1 to 4; thus, it was suggested that excellent gas battier properties could not be maintained for a long period of time in the environment with high temperature and high humidity.

The outer packing materials in Examples 3 to 4 differed from the outer packing material in Example 2 in the point they had the nylon films, which had higher moisture absorbency than that of the PET film, as the outermost layer; however, in the comparison of Examples 3 to 4 with Example 2, remarkable rise regarding the water vapor permeability after being held for 100 hours under the atmosphere having a temperature of 70°C and a humidity of 90%RH was not confirmed. From the result, it was suggested that excellent gas barrier properties was maintained for a long period of time in the environment with high temperature and high humidity if the dimension change rate as the outerpacking material overall after being held for 2 hours under the atmosphere having a temperature of 70°C and a humidity of 90%RH was in the specific range, even when the moisture absorbent material layer was partially included in the layers configuring the outer packing material.

Regarding the outer packing materials in Examples 1 to 4 and Comparative Example 1, in comparison of the water contents after being held for 2 hours under the atmosphere having a temperature of 70°C and a humidity of 90%RH, the water content of the outer packing material in Comparative Example 1 having a large dimension change rate was 10000 ppm or more, which suggested that the dimension change was caused by swelling.

Factors of the increase in the dimension change rate of the outer packing material in the environment with high temperature and high humidity includes "(1) swelling due to humidity" and "(2) swelling due to temperature" . Regarding "(1) swelling due to humidity", swelling due to moisture absorption can be presumably inhibited depending on the kind of layers configuring the outer packing material.

Here, Example 3 differed from Example 2 in the point that the nylon film was used instead of the PET film as the protection film. Nylon usually more easily absorb moisture than PET; however, since the water contents of the outer packing materials overall were the same for Example 2 and Example 3, the dimension change rate after being held in high temperature and high humidity and the water vapor permeability after being held for 100 hours under the atmosphere having a temperature of 70°C and a humidity of 90%RH respectively showed the values in the same level.

Also, Examples 2 and 3 differed from Example 4 in the point that the PBT film was used instead of the PET film as the thermally weldable film. Swelling of the PBT is small especially in a humid and hot environment, and it is a hard material such that Young's modulus thereof is small. Accordingly, in the comparison of Examples 2 and 3 with Example 4, it was shown that the dimension change rate of Examples 2 and 3 due to humid heat was smaller.

From these results, it was presumed that the water content of the outer packing material after being held for the specific time under the environment with high temperature and high humidity was the specific value or less, and thus the dimension change rate of the outer packing material overall especially caused by "(1) swelling due to humidity" was decreased.

As shown in FIG. 5, regarding each of the outer packing material in Examples 1 to 2 and Comparative Example 1, the water vapor permeability was compared in each condition of: in the initial stage, after being held for 100 hours under the atmosphere having a temperature of 70°C and a humidity of 90%RH, after being held for 100 hours under the atmosphere having a temperature of 70°C and a humidity of 0%RH, and after being held for 100 hours under the atmosphere having a temperature of 40°C and a humidity of 90%RH. The water vapor permeability after being held for 100 hours under the atmosphere having a temperature of 70°C and a humidity of 90%RH for all the outer packing materials were strikingly high. Also, the water vapor permeability of the outer packing material after being held for 100 hours under the atmosphere having a temperature of 70°C and a humidity of 0%RH was extremely close value to that of the initial water vapor permeability of each outer packing material.

From these results, it was suggested that the influence to the deterioration in the water vapor permeability of the outer packing material from the temperature of the atmosphere was extremely limited. Also, regarding each of the outer packing material in Examples 1 to 2 and Comparative Example 1, not so much difference was shown in the values of the water vapor permeability after being held for 100 hours under the atmosphere having a temperature of 40°C and a humidity of 90%RH; however, it was confirmed that there was a big difference between Examples 1 to 2 and Comparative Example 1 when the values of the water vapor permeability after being held for 100 hours under the atmosphere having a temperature of 70°C and a humidity of 90%RH was seen. From these results, when specifying the dimension change rate and the water vapor permeability of the outer packing material, not merely the thermal swelling of the outer packing material but the value in "the atmosphere having a temperature of 70°C and a humidity of 90%RH" is specified in consideration of the influence of water vapor at a high temperature, and thus it can be presumably confirmed whether the outer packing material is capable of stably maintaining excellent barrier properties in the environment with high temperature and high humidity.

Also, among the outer packing materials in Examples 5 to 9 of which water vapor permeability was chronologically measured per 100 hours from 0 hour to 500 hours, in particular, the dimension change rate after being held for 2 hours under the atmosphere having a temperature of 70°C and a humidity of 90%RH of the outer packing materials in Examples 5 to 6 was in the specific range, and the water vapor permeability after being held for 500 hours under the atmosphere having 70°C and a humidity of 90%RH showed 0.2 g/ (m$^2$·day) or less; it showed the tendency that the increase in the water vapor permeability from the initial stage was lower than the other Examples 7 to 9. From this, it was suggested that in the outer packing material in Examples 5 to 6, the chronological increase of the water vapor permeability in the environment with high temperature and high humidity was inhibited, and they had excellent properties to stably maintain the barrier properties not only in the initial stage but also for a long period of time.

As shown in Table 2 and FIG. 6, the outer packing materials in Examples 5 to 9 showed the same value for the initial water vapor permeability; however, the tendency of chronological increase in the water vapor permeability per 100 hours varied with the layer structures; it was confirmed that there was a tendency the water vapor permeability of the outer packing materials in Examples 7 and 8 strikingly increased in the hold time between 400 hours and 500 hours. From this result, it was suggested that it would be possible to judge whether the gas barrier properties can be held for a long period of time by specifying the gas barrier properties of the outer packing material with the numerical value of "the water vapor permeability after being held for 500 hours under an atmosphere having a temperature of 70°C and a humidity of 90%RH" even when the tendency of chronological increase in the water vapor permeability of the outer packing material in the environment with high temperature and high humidity varied.

Further, as shown in Table 2, the initial water vapor permeability of the outer packing material in Examples 1 to 2 and Comparative Example 1 was all 0.30 g/ (m$^2$·day) and the same. Meanwhile, as shown in FIG. 7, regarding the value of the water vapor permeability of each of the outer packing material after being held for 100 hours under the atmosphere having a temperature of 70°C and a humidity of 90%RH, there was a tendency that the value was larger in the order of Example 2, Example 1, and Comparative Example 1. Also, regarding the value of the water vapor permeability of the outer packing materials after the bending treatment, there was a tendency that the value was larger in the order of Example 2, Comparative Example 1, and Example 1. From the result above, change in the water vapor permeability due to humid heat and change in the water vapor permeability due to the external force showed different tendencies; thus, it was suggested that there was no correlation between the breakage of the outer packing material due to the influence from the environment and the breakage of the outer packing material due to the external force.

Experiment Examples 1 to 2 and Comparative Experiment Example 1

The outer packing material in a square shape 10 cm width on a side collected from each of the outer packing material in Examples 1 to 2 and Comparative Example 1 was used for Experiment Examples 1 to 2 and Comparative Experiment Example 1. In the square outer packing material, the direction parallel to an arbitrary side was determined as a first direction, and the direction parallel to the vertical side to the arbitrary side was determined as a second direction.

Regarding the outer packing materials in Experiment Examples 1 to 2 and Comparative Experiment Example 1, the dimension and the dimension change rate of the outer packing material of Experiment Examples 1 to 2 and Comparative Experiment Example 1 were measured in accordance with the specification of the dimension change rate of the outer packing material by an arbitrary method explained in the section "A. Vacuum insulation material outer packing material 1. Dimension change rate of vacuum insulation material outer packing material (2) Dimension change rate of vacuum insulation material outer packing material" above, and the below evaluations 7 to 9 were conducted.

[Evaluation 7: Measurement for dimension change rate of vacuum insulation material outer packing material (by arbitrary method)]

Regarding the outer packing materials in Experiment Examples 1 to 2 and Comparative Experiment Example 1, the dimension change rate in the environment with high temperature and high humidity was measured. The dimension change rate was measured by setting the dimension of the outer packing material under an atmosphere having a temperature of 25°C and a humidity of 0%RH as a reference, and measuring the dimension of the outer packing materials in each temperature and humidity by the arbitrary method explained in "A. Vacuum insulation material outer packing material 1. Dimension change rate of vacuum insulation material outer packing material (2) Dimension change rate of vacuum insulation material outer packing material" above . The results are shown in Table 3 below. Incidentally, in "Dimension change rate (%) " in Table 3, the column "Temperature 70°C, Humidity 90%RH" shows the dimension change rate of each outer packing material after the constant temperature and constant humidity step has completed, and the column "Temperature 25°C, Humidity of 0%RH" shows the dimension change rate of each outer packing material after the temperature lowering and humidity lowering step has completed.

[Table 3]

| | Measurement direction | Dimension change rate [%] | | Water vapor permeability [g/(m2· day)] | |
|---|---|---|---|---|---|
| | | Temperature 70°C Humidity 90%RH | Temperature 25°C Humidity 0%RH | 0 hour | 100 hours |
| Example 1 | First direction | 0.53 | 0.18 | 0.30 | 2.40 |
| | Second direction | 0.25 | -0.19 | | |
| Example 2 | First direction | 0.49 | 0.11 | 0.30 | 1.35 |
| | Second direction | 0.19 | -0.22 | | |
| Comparative Experiment Example 1 | First direction | 0.96 | 0.18 | 0.30 | 4.84 |
| | Second direction | 0.72 | -0.1 | | |

[Evaluation 8: Dimension change rate after being held for 2 hours under atmosphere having temperature of 40°C and humidity of 90%RH" (by arbitrary method)]

Regarding each of the outer packing material in Experiment Examples 1 to 2 and Comparative Experiment Example 1, the dimension change rate after being held for 2 hours under the atmosphere having a temperature of 40°C and a humidity of 90%RH was measured by a thermomechanical analyzer (TMA/SS7100 from Hitachi High-Tech Science Corporation) in a pulling mode with the load of 400 mN/mm$^2$. The measurement was conducted by chronologically measuring the dimension in a series of steps: a temperature raising step up to a temperature rising termination temperature of 40°C with a fixed humidity from a temperature rising starting temperature of 25°C and a humidity rising starting humidity of 0%RH; a sequential humidity raising step up to humidity rising termination humidity of 90%RH at the fixed temperature; and a sequential constant temperature and constant humidity step to hold the sample for 2 hours under the atmosphere having a temperature of 40 °C and a humidity of 90%RH, in accordance with the below conditions for raising temperature and raising humidity, and by measuring the dimension change rate to the initial dimension (dimension before raising temperature and raising humidity, a temperature of 25°C and a humidity of 0%RH).
The dimension change rate after being held for 2 hours under the atmosphere having a temperature of 40°C and a humidity of 90%RH was defined by the below formula (7); the dimension change rate was measured in each direction of the direction parallel to the arbitrary side of the outer packing material as a first direction, and the direction parallel to the side vertical to the arbitrary side as a second direction.

$$\text{Dimension change rate } (\%) = (L_2 - L_0)/L_0 \times 100 \ldots (7)$$

(In the formula (7), $L_2$ is the length after being held for 2 hours under the atmosphere having a temperature of 40°C and a humidity of 90%RH, and $L_0$ is the length before raising temperature and raising humidity, at a temperature of 25°C and a humidity of 0%RH.)
Conditions for raising temperature and raising humidity to temperature of 40°C and humidity of 90%RH

Temperature raising starting temperature: 25°C;
Humidity raising starting humidity: 0%RH;
Temperature rising termination temperature: 40°C;
Humidity rising termination humidity: 90%RH (held for 2 hours with temperature of 40°C and humidity of 90%RH);
Temperature raising speed: 10°C/min;
Humidity raising speed: 20%RH/min.

[Evaluation 9: Dimension change rate after being held for 2 hours under atmosphere having temperature of 70°C and humidity of 0%RH" (by arbitrary method)]

Regarding each of the outer packing material in Experiment Examples 1 to 2 and Comparative Experiment Example 1, the dimension change rate after being held for 2 hours under the atmosphere having a temperature of 70°C and a humidity of 0%RH was measured by a thermomechanical analyzer (TMA/SS7100 from Hitachi High-Tech Science Corporation) in a pulling mode with the load of 400 mN/mm$^2$. The measurement was conducted by chronologically measuring the dimension in a series of steps: a temperature raising step up to a temperature rising termination temperature of 70°C with a fixed humidity from a temperature rising starting temperature of 25°C and a humidity rising starting humidity of 0%RH; and a sequential constant temperature and constant humidity step to hold the sample for 2 hours under the atmosphere having a temperature of 70°C and a humidity of 0%RH, in accordance with the below conditions for raising temperature, and by measuring the dimension change rate to the initial dimension (dimension before raising temperature and raising humidity, a temperature of 25°C and a humidity of 0%RH).

The dimension change rate after being held for 2 hours under the atmosphere having a temperature of 70°C and a humidity of 0%RH was defined by the below formula (8) ; the dimension change rate was measured in each direction of the direction parallel to the arbitrary side of the outer packing material as a first direction, and the direction parallel to the side vertical to the arbitrary side as a second direction.

$$\text{Dimension change rate (\%)} = (L_3 - L_0)/L_0 \times 100 \ \ldots \ (8)$$

(In the formula (8), $L_3$ is the length after being held for 2 hours under the atmosphere having a temperature of 70°C and a humidity of 0%RH, and $L_0$ is the length before raising temperature and raising humidity, at a temperature of 25°C and a humidity of 0%RH.)

Conditions for raising temperature to temperature of 70°C and humidity of 0%RH

Temperature raising starting temperature: 25°C;
Humidity raising starting humidity: 0%RH;
Temperature rising termination temperature: 70°C;
Humidity rising termination humidity: 0%RH (held for 2 hours with temperature of 70°C and humidity of 0%RH);
Temperature raising speed: 10°C/min.

Regarding each of the outer packing material in Experiment Examples 1 to 2 and Comparative Experiment Example 1, the dimension change rate after being held for 2 hours respectively under the atmosphere having a temperature of 70°C and a humidity of 90%RH, under the atmosphere having a temperature of 70°C and a humidity of 0%RH, and the atmosphere having a temperature of 40°C and a humidity of 90%RH is shown in FIGS. 8A and 8B. FIG. 8A shows the dimension change rate in the first direction and FIG. 8B shows the dimension change rate in the second direction.

Summary

It can be seen that the outer packing material of Experiment Examples 1 to 2 had small dimension change rate after being held for 2 hours under the atmosphere having a temperature of 70°C and a humidity of 90%RH and thus the water vapor permeability thereof after being held for a long time in the environment with high temperature and high humidity was low. On the other hand, it can be seen that although the initial value of the water vapor permeability of the outer packing material in Comparative Experiment Example 1 was in the same level as that of Experiment Examples 1 to 2 and extremely low, the dimension change rate after being held for 2 hours under the atmosphere having a temperature of 70°C and a humidity of 90%RH was large and thus the water vapor permeability thereof after being held for a long time in the environment with high temperature and high humidity was drastically higher than that of Experiment Examples 1 to 2.

Also, from the results of FIG. 8A and 8B, the dimension change rate of all the outer packing materials in Experiment Examples 1 to 2 and Comparative Experiment Example 1 when being held under the atmosphere having a temperature of 70°C and a humidity of 0%RH was the smallest regardless of the direction but with the same hold time, and it was shown that the dimension change rate increased followed by the order of under the atmosphere having a temperature of 40°C and a humidity of 90%RH and under the atmosphere having a temperature of 70°C and a humidity of 90%RH. From this result, it was presumed that the influence given to the dimension change rate of the outer packing material by the humidity in the atmosphere was larger than the influence given to the dimension change rate of the outer packing material by the temperature in the atmosphere.

In other words, from the results of FIGS. 8A and 8B, it was suggested that the boost of the water vapor permeability did not easily occur even in the environment with high temperature and high humidity for the outer packing materials of which dimension change rate after being held for the desired time "under the atmosphere having a temperature of 70°C and a humidity of 90%RH" was in the specific range, and they could stably maintain excellent barrier properties.

Reference Signs List

1     thermally weldable film
2     gas barrier film
3     resin substrate
4     barrier layer
5     protection film
10    vacuum insulation material outer packing material
11    core material
12    edge
20    vacuum insulation material

**Claims**

1. A vacuum insulation material outer packing material comprising a thermally weldable film and a gas barrier film, **characterized in that**:

   the gas barrier film comprises a resin substrate, and a barrier layer disposed at least one surface side of the resin substrate; and
   when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

2. The vacuum insulation material outer packing material according to claim 1, **characterized in that** a water vapor permeability being 0.2 g/(m$^2$·day) after the vacuum insulation material outer packing material is held for 500 hours under the atmosphere having a temperature of 70°C and a humidity of 90%RH.

3. The vacuum insulation material outer packing material according to claim 1 or 2, **characterized in that** a water content being 10000 ppm or less after the vacuum insulation material outer packing material is held for 2 hours under an atmosphere having a temperature of 70°C and a humidity of 90%RH.

4. The vacuum insulation material outer packing material according to claim 1 or 2, **characterized in that** the barrier layer is either an inorganic compound or a mixture of an organic compound and an inorganic compound.

5. The vacuum insulation material outer packing material according to claim 1 or 2, **characterized in that** the vacuum insulation material outer packing material comprises two or more of the gas barrier film.

6. The vacuum insulation material outer packing material according to claim 1 or 2, **characterized by** further comprising a protection film at a surface of the gas barrier film opposite to the thermally weldable film.

7. A vacuum insulation material comprising a core material and a vacuum insulation material outer packing material enclosing the core material, **characterized in that**
   the vacuum insulation material outer packing material comprises a thermally weldable film and a gas barrier film;
   the gas barrier film comprises a resin substrate, and a barrier layer disposed at least one surface side of the resin substrate; and
   when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

8. An article with a vacuum insulation material provided with an article including a thermal insulation region and a vacuum insulation material, **characterized in that**
the vacuum insulation material comprises a core material and a vacuum insulation material outer packing material enclosing the core material;
the vacuum insulation material outer packing material comprises a thermally weldable film and a gas barrier film;
the gas barrier film comprises a resin substrate, and a barrier layer disposed at least one surface side of the resin substrate; and
when setting a dimension of the vacuum insulation material outer packing material under an atmosphere having a temperature of 25°C and a humidity of 0%RH as a reference, a dimension change rate of the vacuum insulation material outer packing material being 0.8% or less after the vacuum insulation material outer packing material is held for 2 hours under an atmosphere having a temperature of 70°C and a humidity of 90%RH.

**Patentansprüche**

1. Äußeres Verpackungsmaterial mit Vakuumisolationsmaterial, umfassend eine thermisch schweißbare Folie und eine Gassperrfolie, **dadurch gekennzeichnet, dass**:

   die Gassperrfolie ein Harzsubstrat umfasst und eine Sperrschicht auf mindestens einer Oberflächenseite des Harzsubstrats angeordnet ist; und
   beim Festlegen einer Abmessung des äußeren Verpackungsmaterials mit Vakuumisolationsmaterial unter einer Atmosphäre, die eine Temperatur von 25 °C und eine Luftfeuchtigkeit von 0 % r.F. als Referenz aufweist, eine Abmessungsänderungsrate des äußeren Verpackungsmaterials mit Vakuumisolationsmaterial 0,8 % oder weniger beträgt, nachdem das äußere Verpackungsmaterial mit Vakuumisolationsmaterial 2 Stunden lang unter einer Atmosphäre, die eine Temperatur von 70 °C und eine Luftfeuchtigkeit von 90 % r.F. aufweist, gehalten worden ist.

2. Äußeres Verpackungsmaterial mit Vakuumisolationsmaterial nach Anspruch 1, **dadurch gekennzeichnet, dass** eine Wasserdampfdurchlässigkeit 0,2 g/(m$^2$·Tag) beträgt, nachdem das äußere Verpackungsmaterial mit Vakuumisolationsmaterial 500 Stunden unter der Atmosphäre, die eine Temperatur von 70 °C und eine Luftfeuchtigkeit von 90 % r.F. aufweist, gehalten worden ist.

3. Äußeres Verpackungsmaterial mit Vakuumisolationsmaterial nach Anspruch 1 oder 2, **dadurch gekennzeichnet, dass** ein Wassergehalt 10000 ppm oder weniger beträgt, nachdem das äußere Verpackungsmaterial mit Vakuumisolationsmaterial 2 Stunden unter einer Atmosphäre, die eine Temperatur von 70 °C und eine Luftfeuchtigkeit von 90 % r.F. aufweist, gehalten worden ist.

4. Äußeres Verpackungsmaterial mit Vakuumisolationsmaterial nach Anspruch 1 oder 2, **dadurch gekennzeichnet, dass** die Sperrschicht entweder eine anorganische Verbindung oder ein Gemisch aus einer organischen Verbindung und einer anorganischen Verbindung ist.

5. Äußeres Verpackungsmaterial mit Vakuumisolationsmaterial nach Anspruch 1 oder 2, **dadurch gekennzeichnet, dass** das äußere Verpackungsmaterial mit Vakuumisolationsmaterial zwei oder mehr der Gassperrfolie umfasst.

6. Äußeres Verpackungsmaterial mit Vakuumisolationsmaterial nach Anspruch 1 oder 2, **gekennzeichnet durch** weiteres Umfassen einer Schutzfolie an einer Oberfläche der Gassperrfolie gegenüber der thermisch schweißbaren Folie.

7. Vakuumisolationsmaterial, umfassend ein Kernmaterial und ein äußeres Verpackungsmaterial mit Vakuumisolationsmaterial, welches das Kernmaterial umschließt, **dadurch gekennzeichnet, dass**
das äußere Verpackungsmaterial mit Vakuumisolationsmaterial eine thermisch schweißbare Folie und eine Gassperrfolie umfasst;
die Gassperrfolie ein Harzsubstrat umfasst und eine Sperrschicht auf mindestens einer Oberflächenseite des Harzsubstrats angeordnet ist; und
beim Festlegen einer Abmessung des äußeren Verpackungsmaterials mit Vakuumisolationsmaterial unter einer Atmosphäre, die eine Temperatur von 25 °C und eine Luftfeuchtigkeit von 0 % r.F. als Referenz aufweist, eine Abmessungsänderungsrate des äußeren Verpackungsmaterials mit Vakuumisolationsmaterial 0,8 % oder weniger beträgt, nachdem das äußere Verpackungsmaterial mit Vakuumisolationsmaterial 2 Stunden lang unter einer Atmosphäre, die eine Temperatur von 70 °C und eine Luftfeuchtigkeit von 90 % r.F. aufweist, gehalten worden ist.

8. Artikel mit einem Vakuumisolationsmaterial, bereitgestellt mit einem Artikel, der einen Wärmeisolationsbereich und ein Vakuumisolationsmaterial beinhaltet, **dadurch gekennzeichnet, dass**

das Vakuumisolationsmaterial ein Kernmaterial und ein äußeres Verpackungsmaterial mit Vakuumisolationsmaterial, welches das Kernmaterial umschließt, umfasst;

das äußere Verpackungsmaterial mit Vakuumisolationsmaterial eine thermisch schweißbare Folie und eine Gassperrfolie umfasst;

die Gassperrfolie ein Harzsubstrat umfasst und eine Sperrschicht auf mindestens einer Oberflächenseite des Harzsubstrats angeordnet ist; und

beim Festlegen einer Abmessung des äußeren Verpackungsmaterials mit Vakuumisolationsmaterial unter einer Atmosphäre, die eine Temperatur von 25 °C und eine Luftfeuchtigkeit von 0 % r.F. als Referenz aufweist, eine Abmessungsänderungsrate des äußeren Verpackungsmaterials mit Vakuumisolationsmaterial 0,8 % oder weniger beträgt, nachdem das äußere Verpackungsmaterial mit Vakuumisolationsmaterial 2 Stunden lang unter einer Atmosphäre, die eine Temperatur von 70 °C und eine Luftfeuchtigkeit von 90 % r.F. aufweist, gehalten worden ist.

## Revendications

1. Matériau d'emballage externe de matériau isolant sous vide comprenant un film thermosoudable et un film barrière aux gaz, **caractérisé en ce que** :

le film barrière aux gaz comprend un substrat en résine et une couche barrière disposée sur au moins un côté de la surface du substrat en résine ; et

lors du réglage d'une dimension du matériau d'emballage externe de matériau isolant sous vide sous une atmosphère ayant une température de 25 °C et une humidité de 0 % HR comme référence, un taux de changement de dimension du matériau d'emballage externe de matériau isolant sous vide étant de 0,8 % ou moins après que le matériau d'emballage externe de matériau isolant sous vide est maintenu pendant 2 heures sous une atmosphère ayant une température de 70 °C et une humidité de 90 % HR.

2. Matériau d'emballage externe de matériau isolant sous vide selon la revendication 1, **caractérisé en ce qu'**une perméabilité à la vapeur d'eau étant de 0,2 g/(m$^2$/jour) après que le matériau d'emballage externe de matériau isolant sous vide est maintenu pendant 500 heures sous l'atmosphère ayant une température de 70 °C et une humidité de 90 % HR.

3. Matériau d'emballage externe de matériau isolant sous vide selon la revendication 1 ou 2, **caractérisé en ce qu'**une teneur en eau étant de 10000 ppm ou moins après que le matériau d'emballage externe de matériau isolant sous vide est maintenu pendant 2 heures sous une atmosphère ayant une température de 70 °C et une humidité de 90 % HR.

4. Matériau d'emballage externe de matériau isolant sous vide selon la revendication 1 ou 2, **caractérisé en ce que** la couche barrière est soit un composé inorganique soit un mélange d'un composé organique et d'un composé inorganique.

5. Matériau d'emballage externe de matériau isolant sous vide selon la revendication 1 ou 2, **caractérisé en ce que** le matériau d'emballage externe de matériau isolant sous vide comprend au moins deux films barrière aux gaz.

6. Matériau d'emballage externe de matériau isolant sous vide selon la revendication 1 ou 2, **caractérisé en ce qu'**il comprend en outre un film de protection sur une surface du film barrière aux gaz à l'opposé du film thermosoudable.

7. Matériau isolant sous vide comprenant un matériau d'âme et un matériau d'emballage externe de matériau isolant sous vide renfermant le matériau d'âme, **caractérisé en ce que**

le matériau d'emballage externe de matériau isolant sous vide comprend un film thermosoudable et un film barrière aux gaz ;

le film barrière aux gaz comprend un substrat en résine et une couche barrière disposée sur au moins un côté de la surface du substrat en résine ; et

lors du réglage d'une dimension du matériau d'emballage externe de matériau isolant sous vide sous une atmosphère ayant une température de 25 °C et une humidité de 0 % HR comme référence, un taux de changement de dimension du matériau d'emballage externe de matériau isolant sous vide étant de 0,8 % ou moins après que le matériau d'emballage externe de matériau isolant sous vide est maintenu pendant 2 heures sous une atmosphère ayant une température de 70 °C et une humidité de 90 % HR.

8. Article avec un matériau isolant sous vide pourvu d'un article comprenant une région d'isolation thermique et un matériau isolant sous vide, **caractérisé en ce que**

le matériau isolant sous vide comprend un matériau d'âme et un matériau d'emballage externe de matériau isolant sous vide renfermant le matériau d'âme ;

le matériau d'emballage externe de matériau isolant sous vide comprend un film thermosoudable et un film barrière aux gaz ;

le film barrière aux gaz comprend un substrat en résine et une couche barrière disposée sur au moins un côté de la surface du substrat en résine ; et

lors du réglage d'une dimension du matériau d'emballage externe de matériau isolant sous vide sous une atmosphère ayant une température de 25 °C et une humidité de 0 % HR comme référence, un taux de changement de dimension du matériau d'emballage externe de matériau isolant sous vide étant de 0,8 % ou moins après que le matériau d'emballage externe de matériau isolant sous vide est maintenu pendant 2 heures sous une atmosphère ayant une température de 70 °C et une humidité de 90 % HR.

FIG. 1

10

3 } 2
4
1

FIG. 2

10
2
3   1
4

20

12          11

3   4   1
2
10

12

# FIG. 3

FIG. 4A

FIG. 4B

FIG. 4C

FIG. 4D

FIG. 4E

FIG. 4F

FIG. 5

FIG. 6

FIG. 7

FIG. 8A

FIG. 8B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003262296 A
- JP 2013103343 A
- JP 2007327619 A

- JP 2011005835 A
- JP 2014180837 A
- JP 4373797 B